# EUROPEAN PATENT APPLICATION

(11) **EP 4 235 329 A1**
(43) Date of publication of application: **30.08.2023**
(21) Application number: 23152436.4
(22) Date of filing: 19.01.2023
(51) Int. Cl.: G05B 19/418

(54) **CONVEYANCE SYSTEM AND CONVEYANCE METHOD**

(30) Priority: 24.02.2022 JP 2022026564
(71) Applicant: OMRON Corporation, Kyoto 600-8530 (JP)
(72) Inventor: INOUE, Takahiro, Kyoto-shi, 600-8530 (JP); OKADA, Tomohiro, Kyoto-shi, 600-8530 (JP); KAWAMOTO, Yuji, Kyoto-shi, 600-8530 (JP); OSHIRO, Atsushi, Kyoto-shi, 600-8530 (JP); KATAGI, Teisuke, Kyoto-shi, 600-8530 (JP); TSUKIYAMA, Kazunari, Kyoto-shi, 600-8530 (JP); NAGABAYASHI, Yosuke, Kyoto-shi, 600-8530 (JP); MAEHIRO, Takeshi, Kyoto-shi, 600-8530 (JP)
(74) Representative: Mewburn Ellis LLP

(57) **Abstract**

A conveyance method includes: acquiring type identification information identifying a type of a conveyance target article (5, 5A to 5D); acquiring instrument identification information identifying the type of an instrument (350, 350A to 350D) installed in each of a plurality of devices (300, 300A to 300D); specifying the type of the instrument (350, 350A to 350D) associated with the type identified by the type identification information; selecting a target device in which the instrument (350, 350A to 350D) of the specified type is installed among the plurality of devices (300, 300A to 300D); and outputting, to a conveyance robot (200, 200_1), a conveyance instruction to convey the conveyance target article (5, 5A to 5D) to the target device.

## Description

### BACKGROUND OF THE INVENTION

### Field of the Invention

The present disclosure relates to a conveyance system and a conveyance method.

### Description of the Background Art

In recent years, a demand for high-mix low-volume production increases. In a high-mix low-volume production site, a frequency of work by people such as set-up change is high, and labor saving is difficult. Japanese Patent Laying-Open No. 2012-134260 discloses a system that outputs work instruction information of a lot of an offline device based on device state information obtained by reading a signal tower signal of the offline device in order to improve efficiency of human work.

### SUMMARY OF THE INVENTION

Some of the devices installed at the site of high-mix low-volume production need to use an instrument corresponding to a type of an article. A worker must appropriately convey the article to a device in which the instrument corresponding to a type of the article is installed while confirming the instrument installed in the device. As a result, the time required for conveyance becomes long.

The present disclosure has been made in view of the above problems, and an object of the present disclosure is to provide a conveyance system and a conveyance method capable of implementing efficient conveyance of the article.

According to an example of the present disclosure, a conveyance system includes a plurality of devices performing predetermined processing on an article, a conveyance robot, and an instruction unit. In each of the plurality of devices, an instrument of a type arbitrarily selected from a plurality of types of instruments is installed. In each of the plurality of devices, the predetermined processing is performed using the installed instrument. The instruction unit includes a first acquisition unit, a second acquisition unit, a specification unit, a selection unit, and a first output unit. The first acquisition unit acquires first identification information identifying a type of a conveyance target article. The second acquisition unit acquires second identification information identifying a type of the instrument installed in each of the plurality of devices. The specification unit specifies the type of the instrument associated with the type identified by the first identification information using association information associating the type of the article with the type of the instrument used for performing the predetermined processing on the article of the type. The selection unit selects a device in which the instrument of the specified type is installed as a target device among the plurality of devices using the second identification information. The first output unit outputs, to the conveyance robot, a conveyance instruction to convey the conveyance target article to the target device.

According to this disclosure, the article of the conveyance target is conveyed by the conveyance robot to the target device on which the instrument of the type corresponding to the type of the article is installed. Thus, labor of conveyance by a worker is reduced. As a result, efficient conveyance of the article can be implemented.

In the above disclosure, the conveyance robot includes an autonomous traveling robot, a first mechanism that is mounted on the autonomous traveling robot to deliver the article, and a control unit that controls the autonomous traveling robot and the first mechanism. The control unit executes the following pieces of processing (a) to (d) in response to the conveyance instruction.

Processing (a): The control unit moves the autonomous traveling robot to a first mark position and posture corresponding to a collection place of the conveyance target article.

Processing (b): After the autonomous traveling robot reaches the first mark position and posture, the control unit causes the first mechanism to execute a first collection operation collecting the conveyance target article.

Processing (c): After completion of the first collection operation, the control unit moves the autonomous traveling robot to a second mark position and posture corresponding to the target device.

Processing (d): After the autonomous traveling robot reaches the second mark position and posture, the control unit causes the first mechanism to execute a first distribution operation distributing the conveyance target article to the target device.

According to the present disclosure, a belt conveyor, a rail, or the like conveying the article to each device need not to be installed, and a startup time of the conveyance system can be shortened.

In the above disclosure, the conveyance system further includes a storage cabinet capable of storing a plurality of articles. The storage cabinet has a second mechanism releasing a designated article. The first mark position and posture is determined according to the place of the article released from the storage cabinet. The instruction unit further includes a second output unit that outputs, to the storage cabinet, a release instruction of the conveyance target article.

According to this disclosure, the conveyance robot can collect the conveyance target article released from the storage cabinet to convey the article to the target device. As a result, the number of employed workers conveying the article from the storage cabinet to the target device can be reduced.

In the above disclosure, the conveyance system further includes a shelf on which a plurality of articles can be placed. The shelf includes a plurality of placement portions and a first management unit that manages management information in which each of the plurality of placement portions is associated with the type of the placed article. The first mark position and posture is determined according to the target placement portion on which the article of the type identified by the first identification information is placed among the plurality of placement portions. The target placement portion is specified from the plurality of placement portions based on the management information.

According to this disclosure, the conveyance robot can collect the conveyance target article placed on the shelf to convey the article to the target device. As a result, the number of employed workers conveying the article from the shelf to the target device can be reduced.

In the above disclosure, the conveyance system further includes a storage cabinet capable of storing a plurality of articles. The storage cabinet includes a second managing unit that manages a type of each stored article and a second mechanism that releases a designated article. The shelf further includes a detector that detects whether each of the plurality of placement portions is in a first state in which an article is placed or in a second state in which an article is not placed. After the second mechanism completes the release of the designated article, the first management unit updates the management information such that the placement portion that changes first from the second state to the first state among the plurality of placement portions corresponds to the type of the designated article.

According to this disclosure, the first management unit can accurately manage the type of the article conveyed from the storage cabinet to the shelf. As a result, the conveyance robot can convey the conveyance target article from the shelf to the target device.

In the above disclosure, the conveyance system further includes a third mechanism that moves the article released from the storage cabinet to one placement portion in the second state among the plurality of placement portions.

According to this disclosure, employment of the worker moving the article released from the storage cabinet to the shelf is not required.

In the above disclosure, after the autonomous traveling robot reaches the second mark position and posture and before causing the first mechanism to execute the first distributing operation, the control unit causes the first mechanism to execute a second collection operation collecting the article that is placed on the target device and subjected to the predetermined processing. After completion of the first distribution operation, the control unit moves the autonomous traveling robot to a third mark position and posture corresponding to a distribution place of the article on which the predetermined processing is performed. After the autonomous traveling robot reaches the third mark position and posture, the control unit causes the first mechanism to execute a second distribution operation distributing the article subjected to the predetermined processing to the distribution place.

According to the present disclosure, the collection of the article subjected to the predetermined processing from the device and the distribution of the article to the device are simultaneously executed. As a result, the article can be efficiently conveyed.

In the above disclosure, the conveyance system further includes a server that outputs an execution command of the predetermined processing on the conveyance target article to the instruction unit according to a production plan. The server modifies the production plan based on the second identification information so as to reduce a replacement frequency of the instruments in the plurality of devices. According to this disclosure, the frequency of replacement work for the instrument of the device by the worker is reduced.

In the above disclosure, each of the plurality of devices is movable. The second mark position and posture is determined according to the position and posture of the target device.

According to this disclosure, the second mark position and posture is determined according to the position and posture after the movement of the plurality of devices, so that the conveyance robot can convey the conveyance target article to the target device.

In the above disclosure, each of the plurality of devices has a mark provided at a predetermined position. The conveyance robot further includes a camera. The control unit calculates the position of the mark based on the image obtained by the imaging of the camera after the autonomous traveling robot reaches the second mark position and posture, and corrects the first distribution operation by the difference between the calculated position of the mark and a reference position.

According to this disclosure, the first mechanism can distribute the article to the target device even when the positional displacement of the first mechanism is generated with respect to the target device due to the influence of the stop accuracy of the autonomous traveling robot and the target device.

In the above disclosure, each of the plurality of devices has a characteristic object provided at a predetermined position. The conveyance robot further includes a sensor that detects the position of the characteristic object. The control unit adjusts the position and posture of the autonomous traveling robot by the difference between the position detected by the sensor and a reference position when the autonomous traveling robot reaches the second mark position and posture.

According to this disclosure, the first mechanism can distribute the article to the target device even when the positional displacement of the first mechanism is generated with respect to the target device due to the influence of the stop accuracy of the autonomous traveling robot and the target device.

For example, the article is a component constituting a product. The instrument is a tray accommodating the component. In the device, the product is assembled using the component accommodated in the tray.

Alternatively, the instrument is a jig fixing the article. The device evaluates performance of the article fixed by the jig.

Alternatively, the article is a seedling. The instrument is a planting claw planting the seedling. The device plants the seedling using the planting claw.

According to an example of the present disclosure, a conveyance method in a conveyance system includes first to fifth steps. The conveyance system includes a plurality of devices performing predetermined processing on an article, and a conveyance robot. In each of the plurality of devices, an instrument of a type arbitrarily selected from a plurality of types of instruments is installed. In each of the plurality of devices, the predetermined processing is performed using the installed instrument. The first step is a step acquiring first identification information identifying a type of a conveyance target article. The second step is a step acquiring second identification information identifying the type of the instrument installed in each of the plurality of devices. The third step is a step specifying the type of the instrument associated with the type identified by the first identification information using association information in which the type of the article is associated with the type of the instrument performing the predetermined processing on the article of the type. The fourth step is a step selecting a device in which the instrument of the specified type is installed as the target device among the plurality of devices using the second identification information. The fifth step is a step outputting, to the conveyance robot, a conveyance instruction conveying the conveyance target article to the target device. This disclosure also enables efficient conveyance of an article.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view illustrating an application example of a conveyance system according to an embodiment.
Fig. 2 is a view illustrating a conveyance system according to a first specific example of the embodiment.
Fig. 3 is a flowchart illustrating an inspection flow of a general semiconductor wafer.
Fig. 4 is a schematic diagram illustrating an example of a hardware configuration of an instruction server in Figs. 1 and 2.
Fig. 5 is a schematic diagram illustrating an example of a hardware configuration of a conveyance robot in Figs. 1 and 2.
Fig. 6 is a schematic diagram illustrating an example of functional configurations of the instruction server and the conveyance robot in Fig. 2.
Fig. 7 is a view illustrating an example of a storage database.
Fig. 8 is a view illustrating an example of association information.
Fig. 9 is a flowchart illustrating a processing flow of the instruction server.
Fig. 10 is a flowchart illustrating an example of a processing flow of an inspection device.
Fig. 11 is a flowchart illustrating a processing flow of a storage cabinet.
Fig. 12 is a flowchart illustrating a processing flow of the conveyance robot.
Fig. 13 is a view illustrating a periphery of a storage cabinet according to a first modification.
Fig. 14 is a schematic diagram illustrating an example of a functional configuration of an instruction server and a temporary shelf included in a conveyance system of the first modification.
Fig. 15 is a view illustrating an example of a placement database.
Fig. 16 is a view illustrating a periphery of a storage cabinet according to a second modification.
Fig. 17 is a schematic diagram illustrating an example of functional configurations of an instruction server, a temporary shelf, and a conveyance robot included in a conveyance system of the second modification.
Fig. 18 is a schematic diagram illustrating a hardware configuration of a conveyance robot according to a third modification.
Fig. 19 is a schematic diagram illustrating functional configurations of an instruction server and a conveyance robot of a conveyance system of the third modification.
Fig. 20 is a schematic diagram illustrating a conveyance system according to a fourth modification.
Fig. 21 is a schematic diagram illustrating a conveyance system according to a fifth modification.
Fig. 22 is a schematic diagram illustrating an example of a hardware configuration of an autonomous traveling robot of the fifth modification.
Fig. 23 is a schematic diagram illustrating functional configurations of an instruction server and an inspection device of the conveyance system of the fifth modification.
Fig. 24 is a view illustrating a conveyance system according to a second specific example of the embodiment.
Fig. 25 is a schematic diagram illustrating an example of a functional configuration of the conveyance system in Fig. 24.
Fig. 26 is a view illustrating a conveyance system according to a third specific example of the embodiment.
Fig. 27 is a schematic diagram illustrating an example of a functional configuration of the conveyance system in Fig. 26.
Fig. 28 is a view illustrating a conveyance system according to a fourth specific example of the embodiment.
Fig. 29 is a schematic diagram illustrating an example of a functional configuration of the conveyance system in Fig. 28.

### DESCRIPTION OF THE PREFERRED EMBODIMENT

With reference to the drawings, an embodiment of the present invention will be described in detail. The same or equivalent portion in the drawings is denoted by the same reference numeral, and the description will not be repeated. The following modifications described below may selectively be combined as appropriate.

### §1 Application example

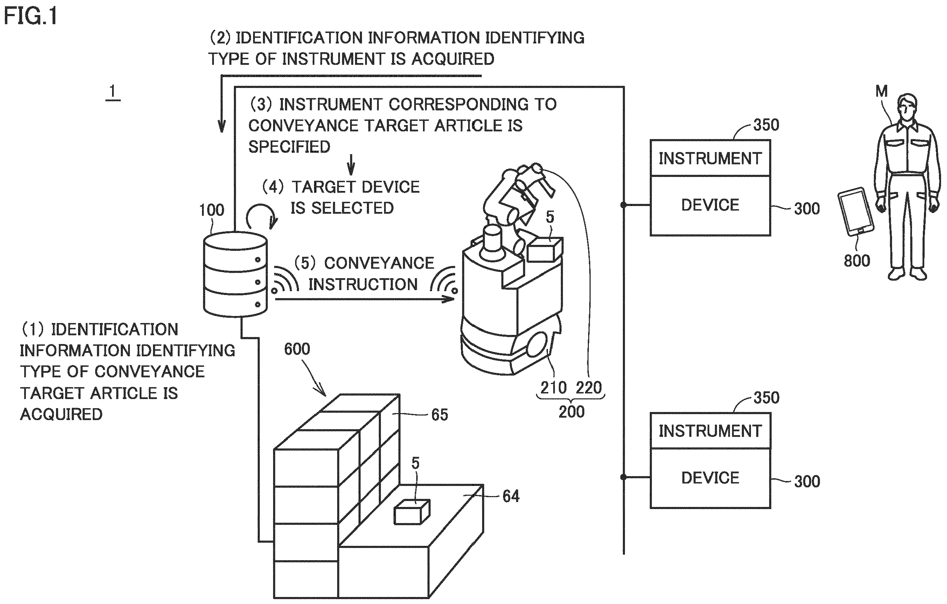

Fig. 1 is a view illustrating an application example of a conveyance system according to an embodiment. As illustrated in Fig. 1, a conveyance system 1 includes an instruction server 100, at least one conveyance robot 200, a plurality of devices 300, a storage cabinet 600, and a terminal 800.

Storage cabinet 600 can store a plurality of articles 5. Storage cabinet 600 has a plurality of storage spaces 65. Article 5 is stored in each of the plurality of storage spaces 65. Storage cabinet 600 includes a table 64 on which stocked article 5 or released article 5 is placed.

In device 300, predetermined processing is performed on article 5. The predetermined processing can include various pieces of processing such as machining, inspection, assembly, evaluation, calibration, and planting.

A type of instrument 350 arbitrarily selected from a plurality of types of instruments 350 is installed in device 300. Instrument 350 is installed on device 300 by a worker M. In the device 300, the predetermined processing is performed on article 5 using installed instrument 350.

Conveyance robot 200 conveys article 5. Conveyance robot 200 includes an autonomous traveling robot 210 and a mechanism that is mounted on autonomous traveling robot 210 to deliver article 5. The conveyance robot in Fig. 1 includes a manipulator 220 configured by a vertical articulated robot as the mechanism. The mechanism is not limited to manipulator 220 configured by the vertical articulated robot, but can include a horizontal articulated robot, a conveyance belt, a parallel link mechanism, a lifting mechanism, and a mechanism using gravity as a power source.

Instruction server 100 executes processing related to conveyance of article 5 to device 300. Specifically, instruction server 100 causes article 5 that becomes the conveyance target to being released from storage cabinet 600 in response to a command from the outside. Thereafter, instruction server 100 transmits, to conveyance robot 200, a conveyance instruction to convey article 5 placed on table 64 to device 300. Thus, conveyance robot 200 conveys article 5 placed on table 64 to device 300 in response to the conveyance instruction.

Furthermore, instruction server 100 may instruct terminal 800 carried by worker M to replace instrument 350 as necessary. Thus, worker M replaces instrument 350 installed in device 300 in response to the instruction. For example, a terminal 800 is a smartphone or a tablet.

The type of instrument 350 to be used varies depending on the type of article 5. Accordingly, article 5 that becomes the conveyance target needs to be conveyed to device 300 on which instrument 350 corresponding to the type of article 5 is installed. Consequently, instruction server 100 executes pieces of processing of steps (1) to (5).

First, instruction server 100 acquires type identification information identifying the type of article 5 of the conveyance target (step (1)).

Subsequently, instruction server 100 acquires instrument identification information identifying the type of instrument 350 installed in each of the plurality of devices 300 (step (2)).

Subsequently, instruction server 100 specifies the type of instrument 350 associated with the type identified by the type identification information using association information associating the type of the article with the type of the instrument performing the predetermined processing on the article of the type (step (3)). That is, instruction server 100 specifies instrument 350 corresponding to article 5 of the conveyance target.

Subsequently, instruction server 100 selects device 300 on which instrument 350 of the specified type is installed as the target device among the plurality of devices 300 using the instrument identification information (step (4)).

Instruction server 100 outputs the instruction (conveyance instruction) to convey article 5 of the conveyance target to the target device to conveyance robot 200 (step (5)).

According to the embodiment, conveyance robot 200 conveys article 5 of the conveyance target to device 300 on which instrument 350 of the type corresponding to the type of article 5 is installed. Thus, the conventional labor of conveying by the worker is reduced. As a result, efficient conveyance of article 5 can be implemented.

### §2 First specific example

### <Outline of first specific example>

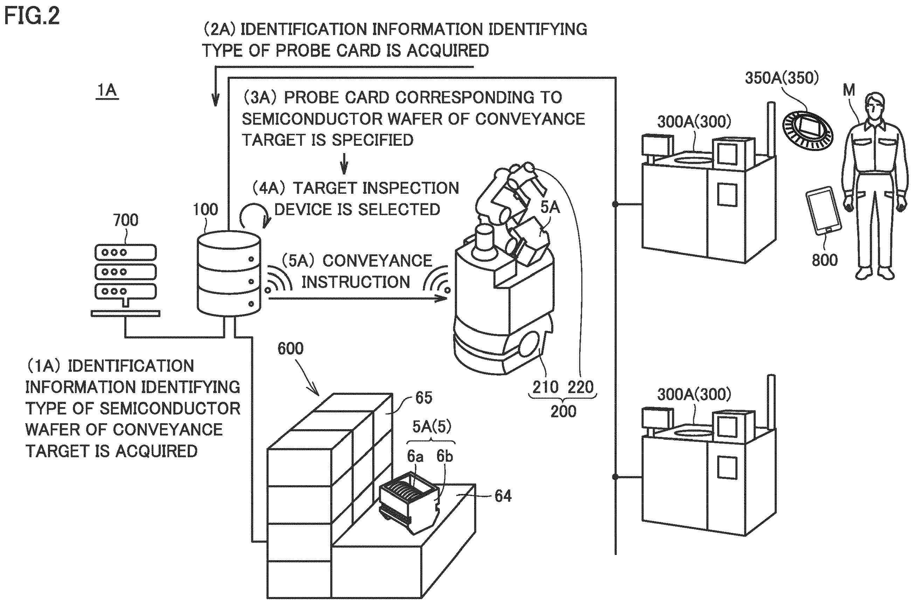

Fig. 2 is a view illustrating a conveyance system according to a first specific example of the embodiment. As illustrated in Fig. 2, a conveyance system 1A of the first specific example conveys a semiconductor wafer set 5A as article 5 of conveyance target. Semiconductor wafer set 5A includes a plurality of semiconductor wafers 6a of the same type and a cassette 6b that holds the plurality of semiconductor wafers 6a. Semiconductor wafer set 5A may include a dummy wafer checking whether device 300 normally operates as semiconductor wafer 6a. Conveyance system 1A includes a plurality of inspection devices 300A as the plurality of devices 300. In inspection device 300A, a probe card 350A is installed as instrument 350. Conveyance system 1A includes a manufacturing execution system (MES) server 700 communicably connected to instruction server 100.

Inspection device 300A is also called a prober, and inspects an electric characteristic of an electric circuit in each semiconductor wafer 6a of semiconductor wafer set 5A using probe card 350A. A type of probe card 350A arbitrarily selected from a plurality of types of probe cards 350A is detachable attached to inspection device 300A. Probe card 350A is attached to a holding member of inspection device 300A by worker M.

An MES server 700 manages manufacturing of a semiconductor wafer. In the first specific example, MES server 700 outputs an inspection command of semiconductor wafer set 5A to the instruction server 100 according to a previously-produced production plan.

Instruction server 100 executes processing related to conveyance of semiconductor wafer set 5A to inspection device 300A.

Specifically, instruction server 100 causes semiconductor wafer set 5A that becomes the conveyance target to be released from storage cabinet 600 in response to the inspection command from MES server 700. Thereafter, instruction server 100 transmits, to conveyance robot 200, the conveyance instruction to convey semiconductor wafer set 5A placed on table 64 to inspection device 300A. Thus, conveyance robot 200 conveys semiconductor wafer set 5A placed on table 64 to inspection device 300A in response to the conveyance instruction. Inspection device 300A inspects conveyed semiconductor wafer set 5A using attached probe card 350A.

The number and arrangement of the terminal electrodes included in semiconductor wafer 6a are different depending on the type of semiconductor wafer set 5A. For this reason, dedicated probe card 350A is required for each type of semiconductor wafer set 5A. That is, semiconductor wafer set 5A that becomes the conveyance target needs to be conveyed to inspection device 300A to which probe card 350A corresponding to the type is attached. Accordingly, instruction server 100 executes the pieces of processing of steps (1A) to (5A).

First, instruction server 100 acquires type identification information identifying the type of semiconductor wafer set 5A of the conveyance target (step (1A)).

Subsequently, instruction server 100 acquires instrument identification information identifying the type of probe card 350A attached to each of the plurality of inspection devices 300A (step (2A)).

Subsequently, instruction server 100 specifies the type of probe card 350A associated with the type identified by the type identification information using association information in which the type of semiconductor wafer set 5A is associated with the type of probe card 350A inspecting semiconductor wafer set 5A of the type (step (3A)). That is, instruction server 100 specifies probe card 350A corresponding to semiconductor wafer set 5A of the conveyance target.

Subsequently, instruction server 100 selects inspection device 300A to which probe card 350A of the specified type is attached among the plurality of inspection devices 300A as the target inspection device using the instrument identification information (step (4A)).

Instruction server 100 outputs, to conveyance robot 200, the instruction (conveyance instruction) to convey semiconductor wafer set 5A of the conveyance target to the target inspection device (step (5A)).

According to the first specific example, conveyance robot 200 conveys semiconductor wafer set 5A of the conveyance target to inspection device 300A to which probe card 350A of the type corresponding to the type of semiconductor wafer set 5A is attached. Thus, the labor of conveying by the conventional worker is reduced. As a result, the efficient conveyance of semiconductor wafer set 5A can be implemented.

### <Flow of semiconductor wafer inspection>

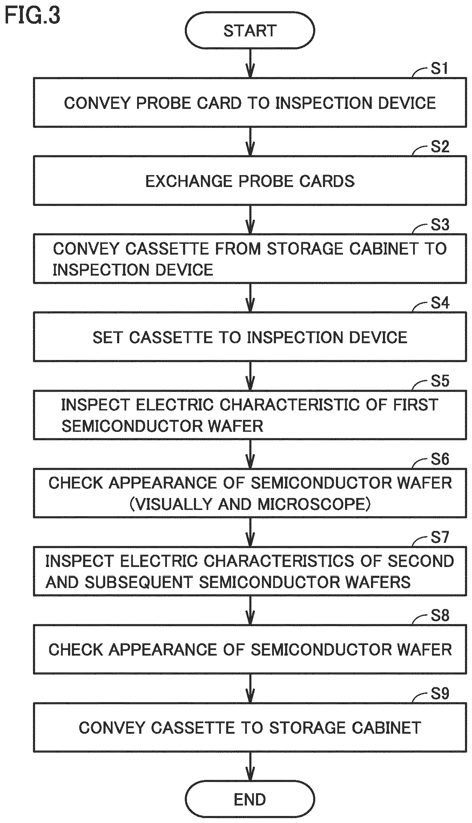

Fig. 3 is a flowchart illustrating an inspection flow of a general semiconductor wafer. First, a probe card is conveyed to an inspection device (step S1). Thereafter, the probe card is replaced in the inspection device (step S2). It typically takes several minutes to replace the probe card.

Subsequently, a semiconductor wafer set is conveyed from a storage cabinet to the inspection device (step S3). Thereafter, the semiconductor wafer set is set to the inspection device (step S4).

Subsequently, an electric characteristic of a first semiconductor wafer of the semiconductor wafer set is inspected in the inspection device (step S5). Usually, it takes several tens of minutes to execute step S5.

After the inspection of the electric characteristic of the first semiconductor wafer is completed, the appearance of the first semiconductor wafer is confirmed (step S6). The appearance of the semiconductor wafer is checked visually or using a microscope.

When there is no problem in the appearance of the first semiconductor wafer, the electric characteristics of the second and subsequent semiconductor wafers are inspected (step S7). Usually, it takes several hours to ten and several hours to execute step S7.

After the inspection of the electric characteristics of the second and subsequent semiconductor wafers is completed, the appearance of the second and subsequent semiconductor wafers is checked (step S8).

Thereafter, the semiconductor wafer set is conveyed to the storage cabinet and stored in the storage cabinet (step S9). The semiconductor wafer set may be stored in the original storage cabinet, or may be stored in another storage cabinet.

In a high-mix low-volume production site, conventionally the subject of steps S1 to S4, S6, S8, S9 is a worker. For this reason, the burden on the worker is large, and the production efficiency is lowered. In the first specific example, instruction server 100 and conveyance robot 200 execute steps S3, S4. Accordingly, the labor of the worker is reduced. Instruction server 100 and conveyance robot 200 may execute step S9 in addition to steps S3, S4.

### <Hardware configuration of instruction server>

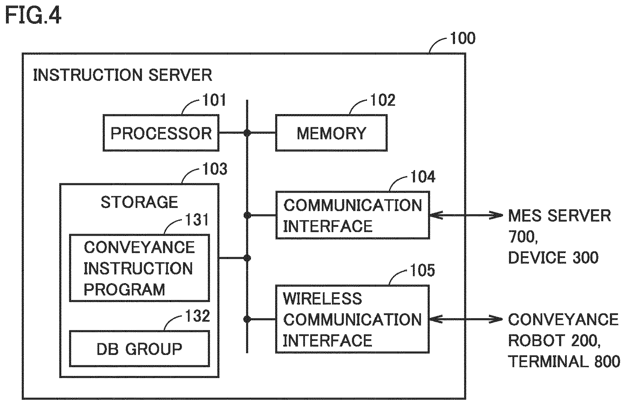

Fig. 4 is a schematic diagram illustrating an example of a hardware configuration of an instruction server in Figs. 1 and 2. Instruction server 100 typically has a structure according to a general-purpose computer architecture.

As illustrated in Fig. 4, instruction server 100 includes a processor 101, a memory 102, a storage 103, a communication interface 104, and a wireless communication interface 105.

Processor 101 is configured of a central processing unit (CPU), a micro processing unit (MPU), and the like. Memory 102 is configured of a volatile storage device such as a dynamic random access memory (DRAM) or a static random access memory (SRAM). For example, storage 103 is configured of a nonvolatile storage device such as a solid state drive (SSD) or a hard disk drive (HDD). Processor 101 develops a program stored in storage 103 on a memory, and executes the program, thereby implementing various pieces of processing of the embodiment.

Storage 103 stores a conveyance instruction program 131 instructing the conveyance by the conveyance robot and various database groups 132.

Communication interface 104 exchanges data with external devices (MES server 700, device 300, and inspection device 300A are included) through a communication cable. Wireless communication interface 105 exchanges the data with external devices (conveyance robot 200 and terminal 800 are included) using wireless communication. Note that the instruction server 100 and the MES server 700 may be wirelessly connected for communication. In this case, wireless communication interface 105 exchanges the data with MES server 700.

When the computer having the structure following the general-purpose computer architecture is used, an operating system (OS) providing a basic function of the computer may be installed in addition to the application providing the function of the embodiment. In this case, the program of the embodiment may call a required module in a predetermined order and timing in program modules provided as a part of the OS to execute processing. That is, the program itself of the embodiment does not include the module as described above, and sometimes the processing is executed in cooperation with the OS. Alternatively, some or all of the functions provided by the execution of conveyance instruction program 131 may be implemented as a dedicated hardware circuit.

### <Hardware configuration of conveyance robot>

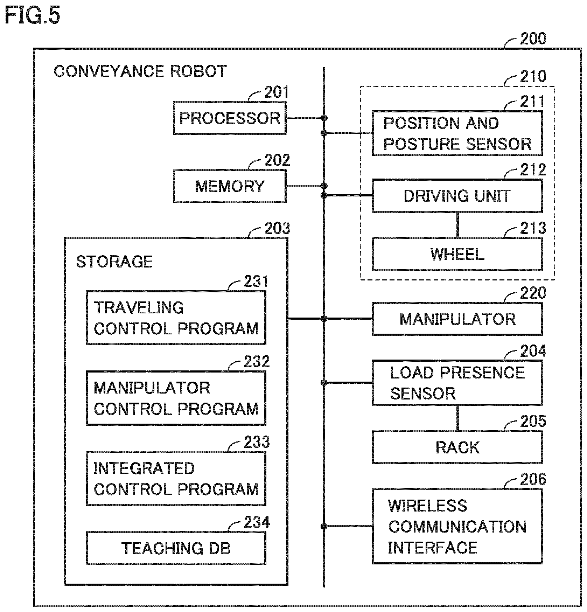

Fig. 5 is a schematic diagram illustrating an example of a hardware configuration of a conveyance robot in Figs. 1 and 2. As illustrated in Fig. 5, conveyance robot 200 includes a processor 201, a memory 202, a storage 203, an autonomous traveling robot 210, a manipulator 220, a load presence sensor 204, a rack 205, and a wireless communication interface 206. Autonomous traveling robot 210 includes a position and posture sensor 211, a driving unit 212, and at least two wheels 213.

Processor 201 includes a CPU or an MPU. Memory 202 is configured of a volatile storage device such as a DRAM or an SRAM. For example, storage 203 is configured of the non-volatile storage device such as an HDD or an SSD. Processor 201 develops a program stored in storage 203 on a memory, and executes the program, thereby implementing various pieces of processing of the embodiment.

A traveling control program 231 controlling autonomous traveling robot 210, a manipulator control program 232 controlling manipulator 220, an integrated control program 233 determining execution timings of traveling control program 231 and manipulator control program 232, and a teaching database 234 are stored in storage 203.

Teaching database 234 includes teaching data indicating a driving procedure of each drive shaft of manipulator 220 picking and placing semiconductor wafer set 5A.

Position and posture sensor 211 measures the position and posture of autonomous traveling robot 210 using a known technique. For example, a self-localization method based on a measurement result of a surrounding environment by light detection and ranging (Lidar), a GPS, a beacon positioning method, an azimuth sensor, and the like can be applied to position and posture sensor 211.

Driving unit 212 drives at least two wheels 213 according to the operation amount generated by processor 201. When the at least two wheels 213 are driven at the same speed, autonomous traveling robot 210 travels forward or backward. When the at least two wheels 213 are driven at different speeds, autonomous traveling robot 210 turns. Processor 201 may turn autonomous traveling robot 210 by changing the direction of wheel 213.

As described above, manipulator 220 is a vertical articulated robot, and has a plurality of drive shafts. Manipulator 220 can take various postures by driving the plurality of drive shafts. Manipulator 220 drives the plurality of drive shafts according to the operation amount generated by processor 201.

Semiconductor wafer set 5A is placed on rack 205. Load presence sensor 204 detects whether semiconductor wafer set 5A is present in rack 205. For example, load presence sensor 204 includes a limit switch, a proximity switch, an image sensor, and a photoelectric sensor.

Wireless communication interface 206 exchanges the data with the external device (including instruction server 100) using the wireless communication.

Some or all of the functions provided by executing traveling control program 231, the manipulator control program 232, and integrated control program 233 may be implemented as a dedicated hardware circuit.

### <Functional configuration>

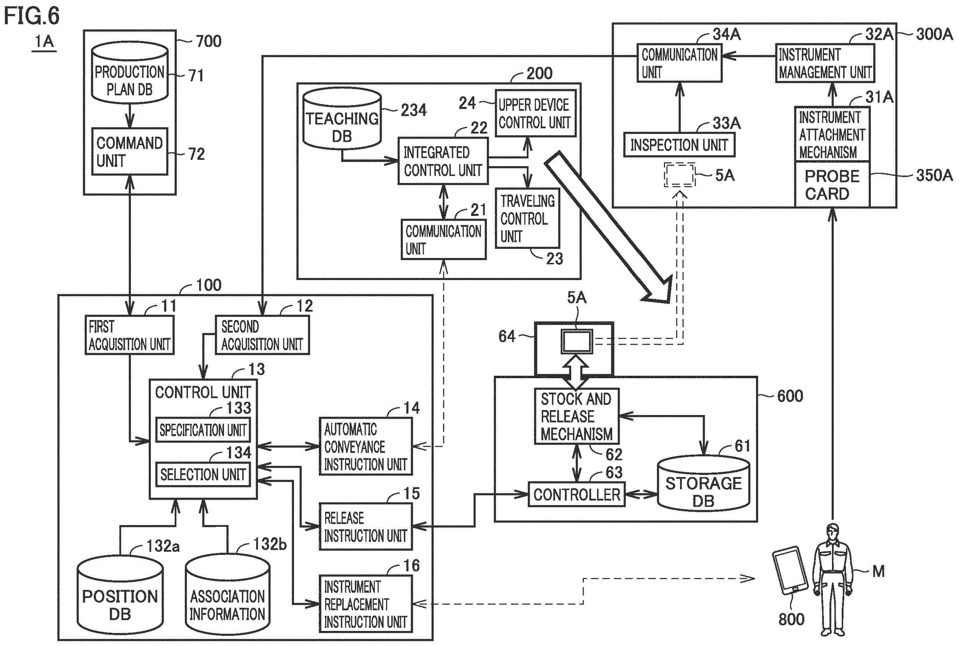

Fig. 6 is a schematic diagram illustrating an example of functional configurations of the instruction server and the conveyance robot in Fig. 2. Fig. 6 also illustrates internal configurations of inspection device 300A, storage cabinet 600, and MES server 700.

### (Inspection device)

Inspection device 300A includes an instrument attachment mechanism 31A, an instrument management unit 32A, an inspection unit 33A, and a communication unit 34A.

Instrument attachment mechanism 31A holds probe card 350A, and electrically connects inspection unit 33A and probe card 350A.

Instrument management unit 32A manages the instrument identification information identifying the type of probe card 350A held by instrument attachment mechanism 31A. For example, instrument management unit 32A acquires the instrument identification information by reading a code (two-dimensional code or barcode) attached to probe card 350A. In this case, the code attached to probe card 350A indicates the type of probe card 350A. Alternatively, instrument management unit 32A may acquire the instrument identification information by reading a radio frequency identifier (RFID) tag attached to probe card 350A. Alternatively, instrument management unit 32A may be electrically connected to an electric circuit of probe card 350A, and acquire the instrument identification information based on a signal obtained by applying voltage to the electric circuit.

Inspection unit 33A inspects the electric characteristic of semiconductor wafer set 5A held by a holding member (not illustrated) using probe card 350A. Inspection unit 33A generates status information indicating an inspection status. The status information includes information indicating whether input semiconductor wafer set 5A is being inspected or next semiconductor wafer set 5A is waiting for being input.

In response to a request from instruction server 100, communication unit 34A transmits the latest instrument identification information managed by instrument management unit 32A and the latest status information generated by inspection unit 33A to instruction server 100. Communication unit 34A does not respond to the request from instruction server 100 when inspection device 300A is not operating for maintenance or the like. Alternatively, communication unit 34A notifies instruction server 100 that the maintenance is being performed.

### (Storage cabinet)

Storage cabinet 600 includes a storage database 61, a stock and release mechanism 62, and a controller 63.

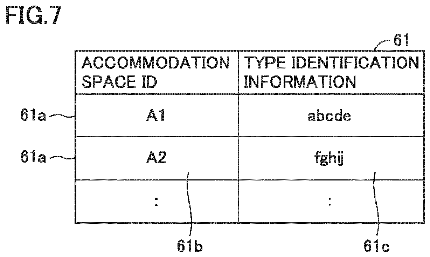

Fig. 7 is a view illustrating an example of a storage database. As illustrated in Fig. 7, storage database 61 has a table format. Storage database 61 includes a record 61a corresponding to each of the plurality of storage spaces 65 (see Fig. 1) of storage cabinet 600. Record 61a includes fields 61b, 61c. A storage space ID identifying a corresponding storage space 65 is described in field 61b. Type identification information identifying the type of semiconductor wafer set 5A stored in corresponding storage space 65 is described in field 61c.

The stock and release mechanism 62 performs a release operation releasing semiconductor wafer set 5A from designated storage space 65 among the plurality of storage spaces 65 to table 64 and a stocking operation stocking semiconductor wafer set 5A placed on table 64 into designated storage space 65.

Controller 63 controls stock and release mechanism 62 and manages storage database 61.

Specifically, controller 63 receives a release instruction from instruction server 100. In addition, controller 63 receives a stock instruction from instruction server 100 or an operation panel (not illustrated). The type identification information identifying the type of semiconductor wafer set 5A is attached to the release instruction and the stock instruction.

In response to the reception of the release instruction, controller 63 specifies record 61a in which the type identification information attached to the release instruction is described in field 61c from storage database 61. Controller 63 controls stock and release mechanism 62 to release semiconductor wafer set 5A from storage space 65 identified by the storage space ID described in field 61b of specified record 61a to table 64. When the release operation by stock and release mechanism 62 is completed, controller 63 updates field 61c of specified record 61a to "null" in storage database 61. Furthermore, controller 63 reports the release completion to instruction server 100.

In response to the reception of the stock instruction, controller 63 specifies one record 61a in which the "null" is described in field 61c from storage database 61. Controller 63 controls stock and release mechanism 62 such that semiconductor wafer set 5A is stocked in storage space 65 identified by the storage space ID described in field 61b of specified record 61a. When the stock operation by stock and release mechanism 62 is completed, controller 63 updates field 61c of specified record 61a to the type identification information attached to the stock instruction in storage database 61.

In this manner, controller 63 manages storage database 61 indicating the type of each stored semiconductor wafer set 5A.

### (MES server)

MES server 700 includes a production plan database 71 and a command unit 72. Production plan database 71 indicates a production plan of the semiconductor wafer. Command unit 72 outputs a command related to manufacturing of the semiconductor wafer to instruction server 100 based on production plan database 71. The command related to manufacturing includes the inspection command. Type identification information identifying the type of semiconductor wafer set 5A that becomes the inspection target is attached to the inspection command.

### (Conveyance robot)

Conveyance robot 200 includes a communication unit 21, an integrated control unit 22, a traveling control unit 23, an upper device control unit 24, and a teaching database 234. Communication unit 21 is implemented by the wireless communication interface in Fig. 5. Integrated control unit 22 is implemented by processor 201 executing integrated control program 233. Traveling control unit 23 is implemented by processor 201 executing traveling control program 231. Upper device control unit 24 is implemented by processor 201 executing manipulator control program 232.

Teaching database 234 includes first teaching data and second teaching data indicating a driving procedure of each drive shaft of manipulator 220. The first teaching data indicates the driving procedure picking semiconductor wafer set 5A placed on table 64 of storage cabinet 600 and placing semiconductor wafer set 5A in rack 205. The second teaching data indicates the driving procedure picking semiconductor wafer set 5A placed on rack 205 and placing semiconductor wafer set 5A on the holding member of inspection device 300A.

Communication unit 21 receives the conveyance instruction from instruction server 100. First mark data indicating a first mark position and posture to be taken by autonomous traveling robot 210 and second mark data indicating a second mark position and posture to be taken by autonomous traveling robot 210 are attached to the conveyance instruction. Communication unit 21 outputs the received conveyance instruction to integrated control unit 22.

In response to receiving the conveyance completion signal from integrated control unit 22, communication unit 21 reports the conveyance completion to instruction server 100.

Traveling control unit 23 calculates the operation amount to be output to driving unit 212 (see Fig. 5) according to a traveling instruction received from integrated control unit 22. The traveling instruction is an instruction moving to the mark position and posture. In response to the current position and posture measured by position and posture sensor 211 (see Fig. 5) reaching the mark position and posture, traveling control unit 23 stops the operation of driving unit 212 and reports the arrival at the mark position and posture to integrated control unit 22.

Upper device control unit 24 calculates the operation amount of each drive shaft of manipulator 220 in response to an operation start instruction received from integrated control unit 22, and outputs the operation amount to manipulator 220. The operation start instruction received from integrated control unit 22 includes a collection operation start instruction collecting semiconductor wafer set 5A from the outside to rack 205 and a distribution operation start instruction distributing semiconductor wafer set 5A of rack 205 to the outside. The teaching data is attached to the collection operation start instruction and the distribution operation start instruction.

In response to receiving the collection operation start instruction, upper device control unit 24 calculates the operation amount of each drive shaft for each control period based on the teaching data attached to the collection operation start instruction. Upper device control unit 24 reports the completion of the collection operation to integrated control unit 22 in response to the completion of the collection operation.

In response to receiving the distribution operation start instruction, upper device control unit 24 calculates the operation amount of each drive shaft for each control cycle based on the teaching data attached to the distribution operation start instruction. In response to the completion of the distribution operation, upper device control unit 24 reports the completion of the distribution operation to integrated control unit 22.

Integrated control unit 22 sequentially executes the following pieces of processing (a) to (e) according to the conveyance instruction received by communication unit 21.

Processing (a): Integrated control unit 22 outputs, to traveling control unit 23, the traveling instruction moving to the first mark position and posture indicated by the first mark data attached to the conveyance instruction.

Processing (b): In response to receiving the report of the arrival at the first mark position and posture from traveling control unit 23, integrated control unit 22 reads the first teaching data from teaching database 234, and outputs, to upper device control unit 24, the collection operation start instruction to which the first teaching data is attached.

Processing (c): In response to receiving the report of the completion of the collection operation from upper device control unit 24, integrated control unit 22 outputs, to traveling control unit 23, the traveling instruction moving to the second mark position and posture indicated by the second mark data attached to the conveyance instruction.

Processing (d): In response to receiving the report of the arrival at the second mark position and posture from traveling control unit 23, integrated control unit 22 reads the second teaching data from teaching database 234, and outputs, to upper device control unit 24, the distribution operation start instruction to which the second teaching data is attached.

Processing (e): Integrated control unit 22 outputs a conveyance completion signal to communication unit 21 in response to receiving the report of the completion of the distribution operation from upper device control unit 24.

After processing (e), integrated control unit 22 may stand by until the next conveyance instruction is received while stopping autonomous traveling robot 210. Alternatively, integrated control unit 22 may determine a home position of conveyance robot 200 as the mark position and posture, and output, to traveling control unit 23, the traveling instruction moving to the mark position and posture. After autonomous traveling robot 210 reaches the home position, integrated control unit 22 may stand by until the next conveyance instruction is received. The home position of conveyance robot 200 is previously determined.

### (Instruction server)

Instruction server 100 includes a first acquisition unit 11, a second acquisition unit 12, a control unit 13, an automatic conveyance instruction unit 14, a release instruction unit 15, an instrument replacement instruction unit 16, a position database 132a, and association information 132b. First acquisition unit 11, second acquisition unit 12, and release instruction unit 15 are implemented by communication interface 104. Control unit 13 is implemented by processor 101 executing conveyance instruction program 131. Automatic conveyance instruction unit 14 and instrument replacement instructing unit 16 are implemented by wireless communication interface 105.

Position database 132a includes first position and posture data and second position and posture data corresponding to each of the plurality of inspection devices 300A. The first position and posture data indicates a position and posture to be taken by autonomous traveling robot 210 when manipulator 220 accesses the space on table 64 of storage cabinet 600. The second position and posture data indicates a position and posture to be taken by autonomous traveling robot 210 when manipulator 220 accesses the holding member of corresponding inspection device 300A.

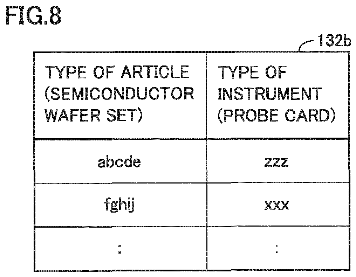

Fig. 8 is a view illustrating an example of association information. As illustrated in Fig. 8, association information 132b is information in which the type of semiconductor wafer set 5A is associated with the type of probe card 350A inspecting semiconductor wafer set 5A of the type, and is previously produced.

First acquisition unit 11 receives the inspection command from MES server 700. As described above, the type identification information identifying the type of semiconductor wafer set 5A of the conveyance target is attached to the inspection command. Accordingly, first acquisition unit 11 acquires the type identification information identifying the type of semiconductor wafer set 5A of the conveyance target.

Second acquisition unit 12 requests information to the plurality of inspection devices 300A, and acquires the instrument identification information identifying the type of probe card 300A attached to inspection device 300A and the status information indicating the inspection status for each of the plurality of inspection devices 350A. Second acquisition unit 12 requests the information to the plurality of inspection devices 300A in response to a request instruction from control unit 13.

Automatic conveyance instruction unit 14 outputs the conveyance instruction to conveyance robot 200. The first mark data and the second mark data that are determined by control unit 13 are added to the conveyance instruction. In response to receiving the first mark data and the second mark data from control unit 13, automatic conveyance instruction unit 14 generates the conveyance instruction to which the first mark data and the second mark data are added, and outputs the generated conveyance instruction to conveyance robot 200.

Release instruction unit 15 outputs the release instruction to storage cabinet 600. The release instruction is attached with the type identification information identifying the type of semiconductor wafer set 5A that becomes the release target. In response to receiving the type identification information from control unit 13, release instruction unit 15 generates the release instruction to which the type identification information is added, and outputs the generated release instruction to storage cabinet 600.

In response to receiving device ID and the instrument identification information from control unit 13, instrument replacement instruction unit 16 outputs an instrument replacement instruction to terminal 800. The instrument replacement instruction is an instruction to replace probe card 350A attached to inspection device 300A identified by the device ID received from control unit 13 with probe card 350A of the type identified by the instrument identification information received from control unit 13.

Control unit 13 controls operations of second acquisition unit 12, automatic conveyance instruction unit 14, release instructing unit 15, and instrument replacement instructing unit 16 in response to the acceptance of the inspection command by first acquisition unit 11.

Control unit 13 outputs a request instruction to the second acquisition unit 12 in response to the acceptance of the inspection command by first acquisition unit 11. Thus, second acquisition unit 12 acquires the instrument identification information and the status information for each of the plurality of inspection devices 300A.

Control unit 13 includes a specification unit 133 and a selection unit 134 as blocks that execute the processing using i) the type identification information attached to the inspection command and ii) the instrument identification information and the status information of each inspection device 300A acquired by second acquisition unit 12.

Specification unit 133 uses association information 132b to specify the type of probe card 350A associated with semiconductor wafer set 5A of the type identified by the type identification information attached to the inspection command.

Using the status information acquired by second acquisition unit 12, selection unit 134 extracts, among the plurality of inspection devices 300A, inspection device 300A that is waiting for next semiconductor wafer set 5A to be inserted. Then, using the instrument identification information acquired by second acquisition unit 12, selection unit 134 selects inspection device 300A to which probe card 350A of the specified type is attached among extracted inspection devices 300A as the target inspection device.

As a processing result of selection unit 134, the following second pattern and third pattern are present in addition to the first pattern that can be selected by the target inspection device.

Second pattern: Probe card 350A of a type different from the specified type is attached to all the inspection devices 300 A that are waiting for next semiconductor wafer set 5A to be inserted.

Third pattern: There is no inspection device 300A waiting for next semiconductor wafer set 5A to be inserted (all the inspection devices 300A are under inspection).

Control unit 13 executes the following processing on each of the first to third patterns.

### (i) First pattern

When the processing result is the first pattern, control unit 13 outputs the type identification information attached to the inspection command to release instruction unit 15. Thus, release instruction unit 15 outputs, to storage cabinet 600, the release instruction to which the type identification information is added. As a result, semiconductor wafer set 5A of the conveyance target is released onto table 64.

Upon receiving the report of the release completion from storage cabinet 600, control unit 13 reads, from position database 132a, i) the first position and posture data and ii) the second position and posture data associated with the target inspection device. Control unit 13 determines the read first position and posture data and second position and posture data as the first mark data and second mark data, respectively, and outputs the determined first mark data and second mark data to automatic conveyance instruction unit 14. Accordingly, automatic conveyance instruction unit 14 outputs the conveyance instruction attached with the first mark data and the second mark data to conveyance robot 200. As a result, conveyance robot 200 moves to the position and posture (that is, the position and posture when manipulator 220 accesses table 64) indicated by the first position and orientation data, and collects semiconductor wafer set 5A placed on table 64 into rack 205. Then, conveyance robot 200 moves to the position and posture (that is, the position and posture when manipulator 220 accesses the holding member of the target inspection device) indicated by the second position and posture data, and distributes semiconductor wafer set 5A placed on rack 205 to the holding member of the target inspection device.

### (ii) Second pattern

When the processing result is the second pattern, control unit 13 arbitrarily selects one inspection device 300A that is waiting for next semiconductor wafer set 5A to be inserted. Control unit 13 outputs, to instrument replacement instruction unit 16, the device ID identifying selected inspection device 300A and the instrument identification information identifying the type of probe card 350A specified by specification unit 133.

Accordingly, instrument replacement instruction unit 16 outputs, to terminal 800, the instrument replacement instruction to replace probe card 350A attached to inspection device 300A identified by the device ID with probe card 350A of the type identified by the instrument identification information. As a result, worker M who has checked terminal 800 goes to instructed inspection device 300A and replaces attached probe card 350A with probe card 350A of the instructed type.

Furthermore, control unit 13 periodically outputs the request instruction to second acquisition unit 12. Accordingly, second acquisition unit 12 acquires the status information indicating that next semiconductor wafer set 5A is on standby for insertion, and the instrument identification information identifying the type of newly attached probe card 350A from inspection device 300A in which replacement of probe card 350A is completed. The type of newly attached probe card 350A is matched with the type specified by specification unit 133. As a result, selection unit 134 can select the target inspection device.

### (iii) Third pattern

When the processing result is the third pattern, control unit 13 periodically outputs the request instruction to second acquisition unit 12. Thus, second acquisition unit 12 periodically acquires the instrument identification information and the status information from each of the plurality of inspection devices 300A until the processing result becomes the first pattern or the second pattern.

### <Processing flow in conveyance system>

### (Instruction server)

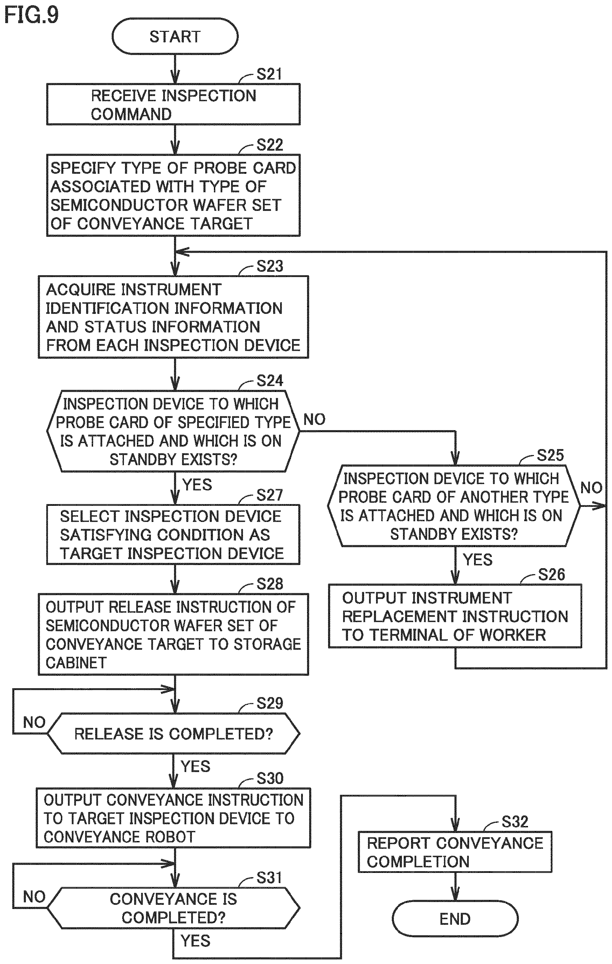

Fig. 9 is a flowchart illustrating a processing flow of the instruction server. First, processor 101 of instruction server 100 receives the inspection command from MES server 700 (step S21). The type identification information identifying the type of semiconductor wafer set 5A of the conveyance target (inspection target) is attached to the inspection command. Accordingly, in step S21, processor 101 acquires the type identification information identifying the type of semiconductor wafer set 5A of the conveyance target.

Subsequently, processor 101 uses association information 132b to specify the type of probe card 350A associated with the type identified by the type identification information attached to the inspection command (step S22).

Subsequently, processor 101 requests the information from each inspection device 300A, and acquires the instrument identification information and the status information from each inspection device 300A (step S23).

Using the instrument identification information and the status information acquired from each inspection device 300A, processor 101 determines whether inspection device 300A to which probe card 350A of the specified type is attached and which is on standby for inputting next semiconductor wafer set 5A exists (step S24).

When negative determination is made in step S24, processor 101 determines whether there is inspection device 300A to which probe card 350A of the type different from the specified type is attached and which is waiting for inputting next semiconductor wafer set 5A (step S25).

When affirmative determination is made in step S25, processor 101 outputs the instrument replacement instruction to terminal 800 of worker M (step S26). The instrument replacement instruction is an instruction to replace probe card 350A attached to one inspection device 300A waiting for inputting next semiconductor wafer set 5A with probe card 350A of the type specified in step S22.

When negative determination is made in step S25 and after step S26, the processing returns to step S23.

When the affirmative determination is made in step S24, processor 101 selects inspection device 300A to which probe card 350A of the type specified in step S22 is attached and which is on standby for inputting next semiconductor wafer set 5A as the target inspection device (step S27).

Subsequently, processor 101 outputs the release instruction of semiconductor wafer set 5A of the conveyance target to storage cabinet 600 (step S28). Specifically, processor 101 outputs, to storage cabinet 600, the release instruction to which the type identification information attached to the inspection command is added.

Subsequently, processor 101 determines whether the report of the release completion is received from storage cabinet 600 (step S29). When the negative determination is made in step S29, the processing returns to step S29.

When the affirmative determination is made in step S29, processor 101 outputs, to conveyance robot 200, the conveyance instruction collecting semiconductor wafer set 5A placed on table 64 and distributing semiconductor wafer set 5A to the target inspection device selected in step S27 (step S30).

Subsequently, processor 101 determines whether the report of the conveyance completion is received from conveyance robot 200 (step S31). When the negative determination is made in step S31, the processing returns to step S31. When the affirmative determination is made in step S31, processor 101 reports the conveyance completion to MES server 700 (step S32). After step S32, the processing ends.

### (Inspection device)

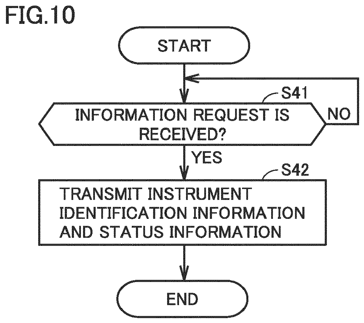

Fig. 10 is a flowchart illustrating an example of a processing flow of an inspection device. First, inspection device 300A determines whether the request for the information is received from instruction server 100 (step S41). When the information request is not received (NO in step S41), the processing returns to step S41.

When receiving the request for information (YES in step S41), inspection device 300A transmits the latest instrument identification information and the latest status information to instruction server 100 (step S42). After step S42, the processing ends.

### (Storage cabinet)

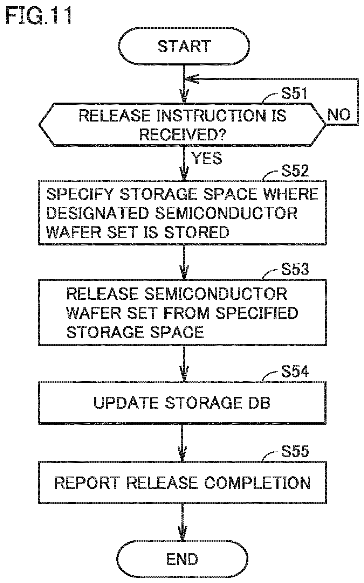

Fig. 11 is a flowchart illustrating a processing flow of a storage cabinet. First, controller 63 of storage cabinet 600 determines whether the release instruction is received from instruction server 100 (step S51). When the release instruction is not received (NO in step S51), the processing returns to step S51.

When the release instruction is received (YES in step S51). Controller 63 specifies storage space 65 corresponding to the type identified by the type identification information attached to the release instruction using storage database 61 in Fig. 7 (step S52). That is, controller 63 specifies storage space 65 in which semiconductor wafer set 5A of the type identified by the type identification information attached to the release instruction is stored.

Subsequently, controller 63 controls stock and release mechanism 62 to release semiconductor wafer set 5A from storage space 65 identified in step S52 to table 64 (step S53).

Subsequently, in storage database 61, controller 63 updates field 61c of record 61a corresponding to storage space 65 from which semiconductor wafer set 5A is released to "null" (step S54).

Subsequently, controller 63 reports the release completion to instruction server 100 (step S55). After step S55, the processing ends.

### (Conveyance robot)

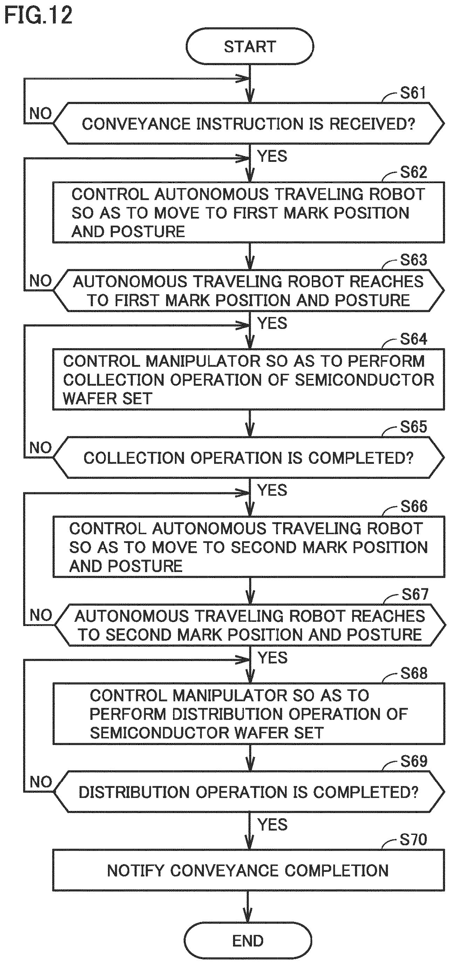

Fig. 12 is a flowchart illustrating a processing flow of the conveyance robot. First, processor 201 of conveyance robot 200 determines whether the conveyance instruction is received (step S61). The first mark data and the second mark data are attached to the conveyance instruction. When the conveyance instruction is not received (NO in step S61), the processing returns to step S61.

When receiving the conveyance instruction (YES in step S61), processor 201 controls autonomous traveling robot 210 to move to the first mark position and posture indicated by the first mark data (step S62).

Subsequently, processor 201 determines whether the position and posture of autonomous traveling robot 210 reaches the first mark position and posture (step S63). When the negative determination is made in step S63, the processing returns to step S62.

When the affirmative determination is made in step S63, processor 201 controls manipulator 220 to execute the collection operation of semiconductor wafer set 5A (step S64).

Subsequently, processor 201 determines whether the collection operation of semiconductor wafer set 5A is completed (step S65). When the negative determination is made in step S65, the processing returns to step S64.

When the affirmative determination is made in step S65, processor 201 controls autonomous traveling robot 210 to move to the second mark position and posture indicated by the second mark data (step S66).

Subsequently, processor 201 determines whether the position and posture of autonomous traveling robot 210 reaches the second mark position and posture (step S67). When the negative determination is made in step S67, the processing returns to step S66.

When the affirmative determination is made in step S67, processor 201 controls manipulator 220 to execute the distribution operation of semiconductor wafer set 5A (step S68).

Subsequently, processor 201 determines whether the distribution operation of semiconductor wafer set 5A is completed (step S69). When the negative determination is made in step S69, the processing returns to step S68.

When the affirmative determination is made in step S69, processor 201 reports the conveyance completion to instruction server 100 (step S70). In step S70, processor 201 may move autonomous traveling robot 210 to the home position. After step S70, the processing ends.

### <Advantages>

As described above, conveyance system 1A of the first specific example includes the plurality of inspection devices 300A that perform predetermined processing (inspection) on semiconductor wafer set 5A, conveyance robot 200, and instruction server 100. Instruction server 100 includes first acquisition unit 11, second acquisition unit 12, specification unit 133, selection unit 134, and automatic conveyance instruction unit 14. First acquisition unit 11 acquires the type identification information identifying the type of semiconductor wafer set 5A of the conveyance target. Second acquisition unit 12 acquires the instrument identification information identifying the type of probe card 350A attached to each of the plurality of inspection devices 300A. Specification unit 133 uses association information 132b to specify the type of probe card 350A associated with the type identified by the type identification information. Association information 132b associates the type of semiconductor wafer set 5A with the type of probe card 350A performing the predetermined processing (inspection) on semiconductor wafer set 5A of the type. Using the instrument identification information, selection unit 134 selects inspection device 300A to which probe card 350A of the specified type is attached among the plurality of inspection devices 300A as the target inspection device. Automatic conveyance instruction unit 14 outputs, to conveyance robot 200, the conveyance instruction to convey semiconductor wafer set 5A of the conveyance target to the target inspection device.

Thus, semiconductor wafer set 5A of the conveyance target is conveyed by conveyance robot 200 to inspection device 300A to which probe card 350A of the type corresponding to the type of semiconductor wafer set 5A is attached. Accordingly, the labor of manual conveyance by the conventional worker is reduced. As a result, the efficient conveyance of semiconductor wafer set 5A can be implemented.

In addition, a large number of inspection devices 300A are arranged at the production site of the semiconductor wafer. Accordingly, when the attachment of probe card 350A to inspection device 300A is executed by worker M, probe card 350A may be attached to inspection device 300A different from designated inspection device 300A due to a human error. Even when such the human error is generated, selection unit 134 can select inspection device 300A to which probe card 350A of the specified type is attached among the large number of inspection devices 300A as the target inspection device using the instrument identification information acquired from each inspection device 300A. As a result, semiconductor wafer set 5A of the conveyance target can be prevented from being conveyed to inspection device 300A to which a non-conforming type of probe card 350A is attached.

Furthermore, because second acquisition unit 12 acquires the instrument identification information from each inspection device 300A, worker M does not need to input the attachment completion of probe card 350A to inspection device 300A to instruction server 100. Accordingly, the labor of the attachment work of probe card 350A by worker M is reduced.

In the conventional production site of the semiconductor wafer, attachment completion of the probe card to the inspection device is required in consideration of the conveyance time of the semiconductor wafer to the inspection device. The attachment time of the probe card to the inspection device can vary depending on a skill level of the worker and the position at the time when the instrument replacement instruction is noticed. However, conveyance system 1A of the first specific example does not depend on variations in the conveyance time by conveyance robot 200 and the attachment time of probe card 350A. Accordingly, the method for operating conveyance system 1A is not required to change according to the conveyance time and the attachment time.

Conveyance robot 200 includes autonomous traveling robot 210, manipulator 220 that is mounted on autonomous traveling robot 210 and delivers and receives semiconductor wafer set 5A, and processor 201 (integrated control unit 22, traveling control unit 23, and upper device control unit 24) that controls autonomous traveling robot 210 and manipulator 220. In response to the conveyance instruction, processor 201 moves autonomous traveling robot 210 to the first mark position and posture corresponding to the collection place of semiconductor wafer set 5A of the conveyance target (processing (a)). After autonomous traveling robot 210 reaches the first mark position and posture, processor 201 causes manipulator 220 to execute the collection operation collecting semiconductor wafer set 5A of the conveyance target (processing (b)). After completion of the collection operation, processor 201 moves autonomous traveling robot 210 to the second mark position and posture corresponding to the target inspection device (processing (c)). After autonomous traveling robot 210 reaches the second mark position and posture, processor 201 causes manipulator 220 to execute the distribution operation of distributing semiconductor wafer set 5A of the conveyance target to the target inspection device (processing (d)).

As a result, a belt conveyor, a rail, or the like conveying semiconductor wafer set 5A to each inspection device 300A are not required to be installed, and the startup time of the production site can be shortened.

Conveyance system 1A further includes storage cabinet 600 capable of storing the plurality of semiconductor wafer sets 5A. Storage cabinet 600 includes stock and release mechanism 62 that release designated semiconductor wafer set 5A. The first mark position and posture is determined according to table 64 that is the place of semiconductor wafer set 5A released from storage cabinet 600. Instruction server 100 further includes release instruction unit 15 that outputs the release instruction of semiconductor wafer set 5A of the conveyance target to storage cabinet 600.

Thus, conveyance robot 200 can collect, from table 64, semiconductor wafer set 5A that is released from storage cabinet 600 and becomes the conveyance target, and convey semiconductor wafer set 5A to the target inspection device. As a result, the number of employed workers conveying semiconductor wafer set 5A from storage cabinet 600 to the target inspection device can be reduced.

### <First modification>

Depending on the specifications of conveyance robot 200 and storage cabinet 600, sometimes manipulator 220 of conveyance robot 200 cannot access semiconductor wafer set 5A placed on table 64 of storage cabinet 600. A first modification is a mode corresponding to such a case.

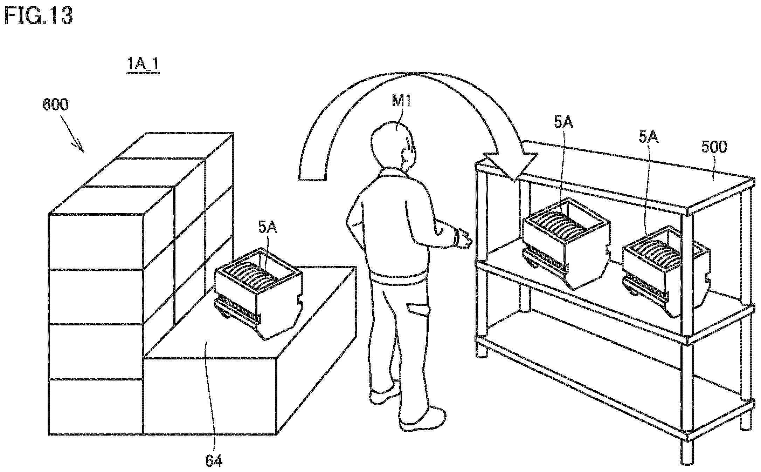

Fig. 13 is a view illustrating a periphery of a storage cabinet according to a first modification. As illustrated in Fig. 13, a conveyance system 1A_1 according to the first modification includes a temporary shelf 500 having a placement portion that can be accessed by manipulator 220 of conveyance robot 200 in addition to storage cabinet 600. A worker M1 moves semiconductor wafer set 5A placed on table 64 of storage cabinet 600 onto the placement portion of temporary shelf 500.

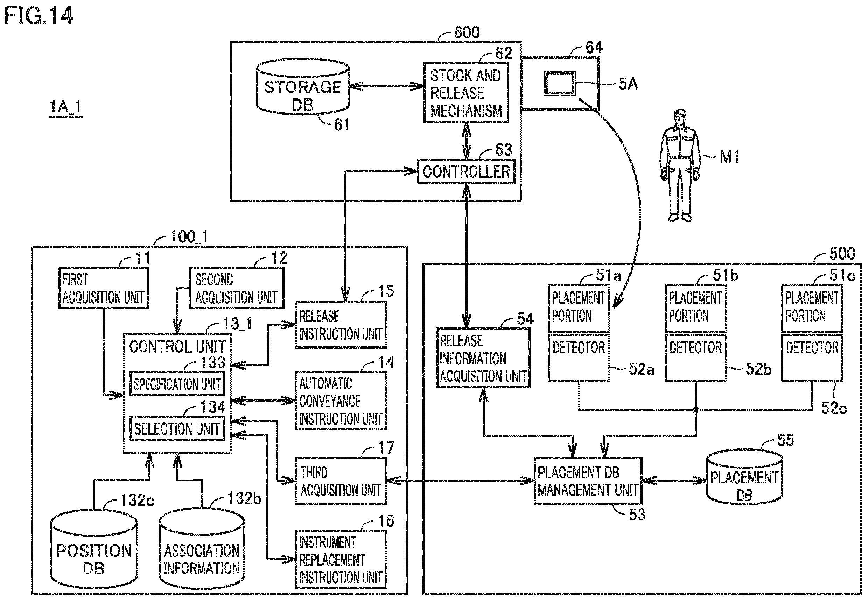

Fig. 14 is a schematic diagram illustrating an example of a functional configuration of an instruction server and a temporary shelf included in a conveyance system of the first modification. Conveyance system 1A_1 of the first modification is different from conveyance system 1A in Fig. 6 in that an instruction server 100_1 is provided instead of instruction server 100 and a temporary shelf 500 is provided. Conveyance system 1A_1 of the first modification includes MES server 700, conveyance robot 200, the plurality of inspection devices 300A, and terminal 800 similarly to conveyance system 1A, but these are not illustrated in Fig. 14.

Controller 63 of storage cabinet 600 has the following functions in addition to the above functions. That is, when semiconductor wafer set 5A is released to table 64 by stock and release mechanism 62, controller 63 outputs the release information indicating that semiconductor wafer set 5A is released to table 64 to temporary shelf 500. The type identification information identifying the type of released semiconductor wafer set 5A is attached to the release information.

Temporary shelf 500 includes placement portions 51a to 51c, detectors 52a to 52c, a placement database management unit 53, a release information acquisition unit 54, and a placement database 55.

Release information acquisition unit 54 acquires the release information from storage cabinet 600. Semiconductor wafer set 5A is placed on each of placement portions 51a to 51c by worker M1.

Detectors 52a to 52c output signals indicating the presence or absence of mounting of semiconductor wafer set 5A for placement portions 51a to 51c, respectively. Specifically, each of detectors 52a to 52c outputs the signal indicating one of a first state in which semiconductor wafer set 5A is placed on the corresponding placement unit and a second state in which semiconductor wafer set 5A is not placed on the corresponding placement unit. For example, detectors 52a to 52c include a limit switch, an image sensor, and a photoelectric sensor.

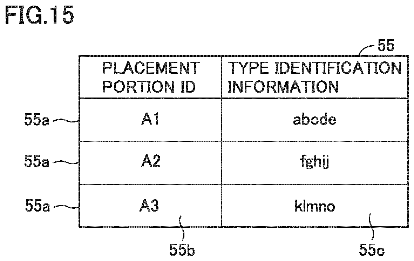

Fig. 15 is a view illustrating an example of a placement database. As illustrated in Fig. 15, placement database 55 has a table format and includes a record 55a corresponding to each of placement portions 51a to 51c. Record 55a includes a field 55b in which a placement portion ID identifying a corresponding placement portion is described, and a field 55c in which the type identification information identifying the type of semiconductor wafer set 5A placed on the corresponding placement portion is described.

Placement database management unit 53 updates placement database 55 based on the release information acquired by release information acquisition unit 54 and the signals from detectors 52a to 52c.

Specifically, placement database management unit 53 specifies the placement portion that changes first from the second state to the first state after release information acquisition unit 54 acquires the release information among placement portions 51a to 51c based on the output signals of detectors 52a to 52c. Specifically, placement database management unit 53 extracts record 55a describing the placement portion ID of the placement portion corresponding to the detector in which the output signal switches first from the second state to the first state after release information acquisition unit 54 acquires the release information. Placement database management unit 53 describes the type identification information attached to the release information in field 55c of extracted record 55a.

Furthermore, placement database management unit 53 constantly monitors output signals of detectors 52a to 52c. Placement database management unit 53 specifies the detection unit in which the output signal switches from the first state to the second state among detectors 52a to 52c. Placement database management unit 53 extracts, from placement database 55, record 55a in which the placement portion ID of the placement portion corresponding to the specified detector is described. Placement database management unit 53 updates field 55c of extracted record 55a to "null".

In this manner, placement database management unit 53 manages placement database 55 that is management information in which each of placement portions 51a to 51c is associated with the type of placed semiconductor wafer set 5A. Placement database management unit 53 provides instruction server 100_1 with latest placement database 55 in response to the request from instruction server 100_1.

Instruction server 100_1 is different from instruction server 100 in Fig. 6 in that instruction server 100_1 includes a control unit 13_1 and a position database 132c instead of control unit 13 and position database 132a, respectively, and includes a third acquisition unit 17. Instruction server 100_1 has a hardware configuration similar to that of instruction server 100 in Fig. 4. Third acquisition unit 17 is implemented by communication interface 104. Control unit 13_1 is implemented by processor 101 executing conveyance instruction program 131.

In response to receiving the request instruction from control unit 13_1, third acquisition unit 17 makes the information request to temporary shelf 500 and acquires latest placement database 55.

Position database 132c is different from position database 132a in Fig. 6 in that position database 132c includes third position and posture data associated with each of placement portions 51a to 51c of temporary shelf 500 instead of the first position and posture data. The third position and posture data indicates the position and posture to be taken by autonomous traveling robot 210 when manipulator 220 accesses the corresponding placement portion.

Control unit 13_1 is different from control unit 13 in Fig. 6 in that the following processing is executed when the processing result by selection unit 134 is the first pattern.

When the processing result is the first pattern, control unit 13_1 outputs the type identification information attached to the inspection command to release instruction unit 15. Thus, release instruction unit 15 outputs the release instruction to which the type identification information is added to storage cabinet 600. As a result, semiconductor wafer set 5A of the conveyance target is released onto table 64. Worker M1 moves semiconductor wafer set 5A placed on table 64 to an empty placement portion of temporary shelf 500.

Upon receiving the report of the release completion from storage cabinet 600, control unit 13_1 outputs the request instruction to third acquisition unit 17, and acquires latest placement database 55 from third acquisition unit 17. Control unit 13_1 determines whether there is record 55a in which the type identification information attached to the inspection command is described in field 55c in latest placement database 55. When this record 55a does not exist in latest placement database 55, control unit 13_1 outputs the request instruction to third acquisition unit 17 again.

When record 55a in which the type identification information attached to the inspection command is described in field 55c exists in latest placement database 55, control unit 13_1 specifies the target placement portion identified by the placement portion ID described in field 55b of record 55a. That is, the target placement portion on which semiconductor wafer set 5A of the type identified by the type identification information attached to the inspection command is placed is specified from placement portions 51a to 51c based on placement database 55.

Control unit 13_1 reads the third position and posture data corresponding to the target placing portion from position database 132c. Furthermore, control unit 13_1 reads the second position and posture data associated with the target inspection device. Control unit 13_1 determines the read third position and posture data and second position and posture data as the first mark data and the second mark data, and outputs the determined first mark data and second mark data to automatic conveyance instruction unit 14. As a result, the first mark position and posture indicated by the first mark data is determined according to the target placement portion on which semiconductor wafer set 5A of the type identified by the type identification information attached to the inspection command is placed among placement portions 51a to 51c.

Automatic conveyance instruction unit 14 outputs, to conveyance robot 200, the conveyance instruction attached with the first mark data and the second mark data. As a result, conveyance robot 200 moves to the position and posture (that is, the position and posture when manipulator 220 accesses the placement portion on which semiconductor wafer set 5A of the conveyance target is placed) indicated by the third position and posture data. Then, conveyance robot 200 collects semiconductor wafer set 5A placed on the placement portion into rack 205. Thereafter, conveyance robot 200 moves to the position and posture indicated by the second position and posture data, and distributes semiconductor wafer set 5A placed on rack 205 to the holding member of the target inspection device.

According to the first modification, even when manipulator 220 of conveyance robot 200 cannot access semiconductor wafer set 5A placed on table 64 of storage cabinet 600, conveyance robot 200 can convey semiconductor wafer set 5A from temporary shelf 500 to inspection device 300A.

Attachment work of probe card 350A to inspection device 300A requires specialized knowledge. Accordingly, worker M having the specialized knowledge is require to be employed with the attachment work as a person in charge. On the other hand, the operation (movement operation) of moving semiconductor wafer set 5A released to table 64 to the empty placement unit of temporary shelf 500 is simple. Accordingly, it is easy to secure the person in charge of the movement work.

### <Second modification>

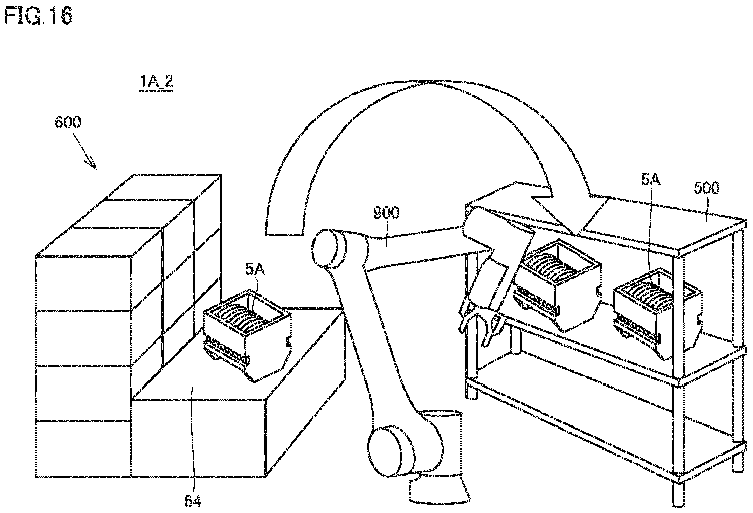

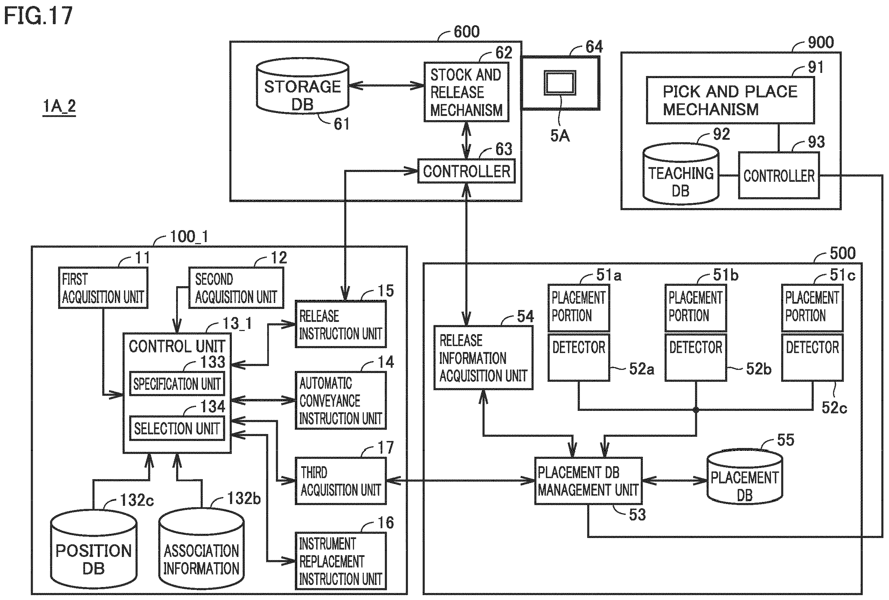

Fig. 16 is a view illustrating a periphery of a storage cabinet according to a second modification. Fig. 17 is a schematic diagram illustrating an example of functional configurations of an instruction server, a temporary shelf, and a conveyance robot included in a conveyance system of the second modification. As illustrated in Figs. 16 and 17, a conveyance system 1A_2 according to the second modification is different from conveyance system 1A_1 of the first modification in that a conveyance robot 900 is provided. Conveyance robot 900 performs the operation of moving semiconductor wafer set 5A placed on table 64 of storage cabinet 600 to the placement portion of temporary shelf 500. Accordingly, worker M1 is not required to be employed.

As illustrated in Fig. 17, conveyance robot 900 includes a pick and place mechanism 91, a teaching database 92, and a controller 93.

Pick and place mechanism 91 moves semiconductor wafer set 5A released from storage cabinet 600 to one placement portion of placement portions 51a to 51c that is in the second state in which semiconductor wafer set 5A is not placed. Specifically, pick and place mechanism 91 performs an operation of picking semiconductor wafer set 5A placed on table 64 and placing semiconductor wafer set 5A on one placement portion in the second state. Pick and place mechanism 91 is typically configured by a vertical articulated robot. However, pick and place mechanism 91 is not limited to the vertical articulated robot, but may take various forms.

Teaching database 92 includes teaching data corresponding to each of placement portions 51a to 51c of temporary shelf 500. The teaching data indicates a driving procedure of pick and place mechanism 91 picking semiconductor wafer set 5A placed on table 64 and placing semiconductor wafer set 5A on corresponding placement portions 51a to 51c.

Controller 93 controls pick and place mechanism 91 in response to the output of the release information from storage cabinet 600. Controller 93 requests temporary shelf 500 for latest placement database 55, and specifies one placement portion in the second state in which semiconductor wafer set 5A is not placed based on placement database 55. That is, in placement database 55, controller 93 specifies the placement portion identified by the placement portion ID described in field 55b of record 55a in which field 55c is "null" as the placement portion on which semiconductor wafer set 5A is not placed. Controller 93 reads the teaching data corresponding to the specified placement portion from teaching database 92, and controls pick and place mechanism 91 according to the read teaching data.

According to the second modification, even when manipulator 220 of conveyance robot 200 cannot access semiconductor wafer set 5A placed on table 64 of storage cabinet 600, conveyance robot 200 can convey semiconductor wafer set 5A from temporary shelf 500 to inspection device 300A.

### <Third modification>

When conveyance robot 200 conveys semiconductor wafer set 5A of the conveyance target to inspection device 300A, conveyance robot 200 may collect inspected semiconductor wafer set 5A from inspection device 300A. Thus, the conveyance of semiconductor wafer set 5A is made efficient.

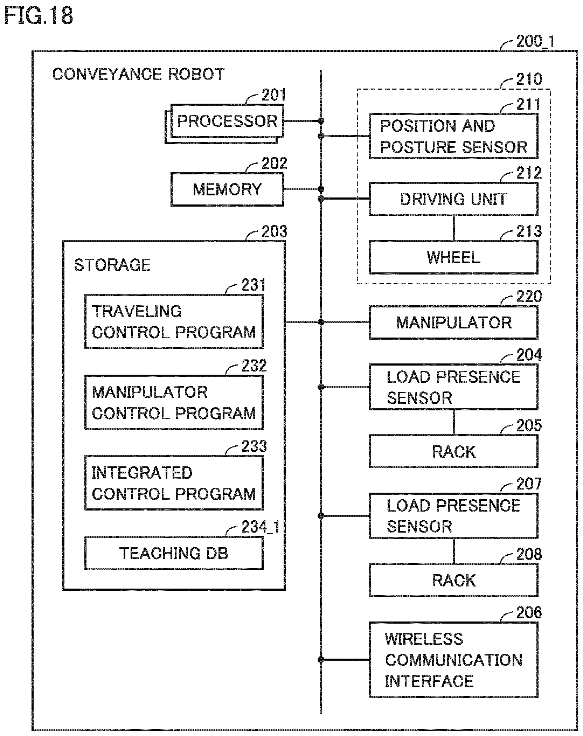

Fig. 18 is a schematic diagram illustrating a hardware configuration of a conveyance robot according to a third modification. As illustrated in Fig. 18, a conveyance robot 200_1 of the third modification is different from conveyance robot 200 in Fig. 5 in that conveyance robot 200_1 includes a load presence sensor 207 and a rack 208.

Semiconductor wafer set 5A is placed on rack 208. Load presence sensor 207 detects whether semiconductor wafer set 5A is placed on rack 208. For example, load presence sensor 207 includes a limit switch, a proximity switch, an image sensor, or a photoelectric sensor.

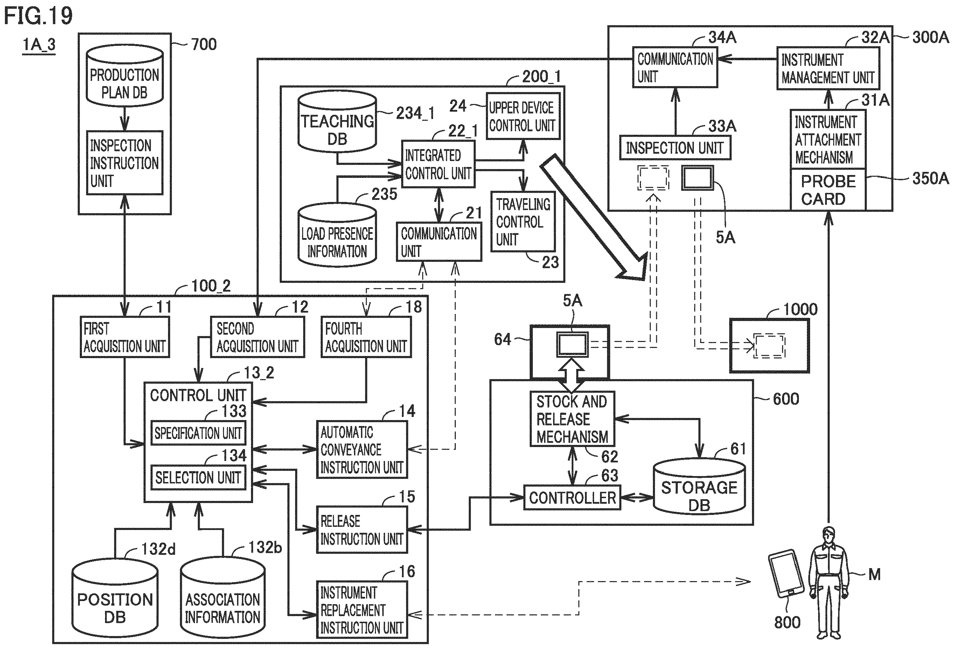

Fig. 19 is a schematic diagram illustrating functional configurations of an instruction server and a conveyance robot of a conveyance system of the third modification. As illustrated in Fig. 19, a conveyance system 1A_3 of the third modification is different from conveyance system 1A in Fig. 6 in that conveyance system 1A_3 includes an instruction server 100_2 and at least one conveyance robot 200_1 instead of instruction server 100 and at least one conveyance robot 200.

As compared with conveyance robot 200 in Fig. 6, conveyance robot 200_1 includes an integrated control unit 22_1 and a teaching database 234_1 instead of integrated control unit 22 and teaching database 234, and further includes a load presence information storage 235.

Load presence information storage 235 stores load presence information indicating whether semiconductor wafer set 5A is placed on racks 205, 208. Communication unit 21 transmits the load presence information to instruction server 100_2 in response to a request from instruction server 100_2.

Teaching database 234_1 is different from teaching database 234 in Fig. 6 in that teaching database 234_1 further includes third teaching data and fourth teaching data. The third teaching data and the fourth teaching data indicate the driving procedure of each drive shaft of manipulator 220.

The third teaching data indicates the driving procedure of each drive shaft for picking inspected semiconductor wafer set 5A held by the holding member of inspection device 300A and placing semiconductor wafer set 5A in rack 208. The fourth teaching data indicates the driving procedure of each drive shaft for picking semiconductor wafer set 5A placed on rack 208 and placing semiconductor wafer set 5A in a storage cabinet 1000. Storage cabinet 1000 stores inspected semiconductor wafer set 5A.

In addition to the function of integrated control unit 22, integrated control unit 22_1 sequentially executes the above pieces of processing (a) to (c) and the following pieces of processing (f) to (i) in response to the first mark data to third mark data attached to the conveyance instruction received by communication unit 21.

Processing (f): In response to the reception of the arrival report to the second mark position and posture from traveling control unit 23, integrated control unit 22_1 reads the third teaching data from teaching database 234_1, and outputs the collection operation start instruction to which the third teaching data is attached to upper device control unit 24.

Processing (g): In response to the completion reception of the collection operation from upper device control unit 24, integrated control unit 22_1 reads the second teaching data from teaching database 234_1, and outputs the distribution operation start instruction to which the second teaching data is attached to upper device control unit 24.

Processing (h): Integrated control unit 22_1 outputs the conveyance completion signal to communication unit 21 in response to the reception of the completion report of the distribution operation from upper device control unit 24. Further, integrated control unit 22_1 outputs the traveling instruction moving to the third mark position and posture indicated by the third target data attached to the conveyance instruction to traveling control unit 23.

Processing (i): In response to the reception of the arrival report to the third mark position and posture from traveling control unit 23, integrated control unit 22_1 reads the fourth teaching data from teaching database 234_1, and outputs the distribution operation start instruction to which the fourth teaching data is attached to upper device control unit 24.

After processing (i), integrated control unit 22_1 may stand by until the next conveyance instruction is received while stopping autonomous traveling robot 210. Alternatively, integrated control unit 22_1 may determine the home position of conveyance robot 200_1 as the mark position and posture, and output the traveling instruction moving to the mark position and posture to traveling control unit 23. After autonomous traveling robot 210 reaches the home position, integrated control unit 22_1 may stand by until the next conveyance instruction is received.

As described above, communication unit 34A of inspection device 300A transmits the instrument identification information and the status information to instruction server 100_2 in response to the information request. However, in the third modification, the status information further includes the information indicating whether inspected semiconductor wafer set 5A is attached to inspection device 300A.

Instruction server 100_2 is different from instruction server 100 in Fig. 6 in that instruction server 100_2 includes a control unit 13_2 and a position database 132d instead of control unit 13 and position database 132a, and includes a fourth acquisition unit 18. Instruction server 100_2 has a hardware configuration similar to that of instruction server 100 in Fig. 4. Control unit 13_2 is implemented by processor 101 executing conveyance instruction program 131.

Fourth acquisition unit 18 requests the load presence information from all of at least one conveyance robot 200_1, and acquires the load presence information from each of the at least one conveyance robot 200_1.

Position database 132d is different from position database 132a in Fig. 6 in that position database 132d includes fourth position and posture data. The fourth position and posture data indicates a position and posture to be taken by autonomous traveling robot 210 when manipulator 220 accesses storage 1000.

Control unit 13_2 is different from control unit 13 in Fig. 6 in that the following processing is executed when the processing result of selection unit 134 is the first pattern.

When the processing result is the first pattern, control unit 13_2 determines whether inspected semiconductor wafer set 5A is attached to the target inspection device based on the status information received from the target inspection device.

Furthermore, control unit 13_2 instructs fourth acquisition unit 18 to acquire the load presence information. Based on the load presence information, control unit 13_2 checks whether there is conveyance robot 200_1 in which semiconductor wafer set 5A is not placed on both racks 205, 208 among at least one conveyance robot 200_1.

When inspected semiconductor wafer set 5A is attached to the target inspection device and conveyance robot 200_1 in which semiconductor wafer set 5A is not placed on both of racks 205, 208 exists, control unit 13_2 executes the following processing.

Specifically, control unit 13_2 outputs, to release instruction unit 15, the type identification information attached to the inspection command. As a result, semiconductor wafer set 5A of the conveyance target is released onto table 64. Upon receiving the report of the release completion from storage cabinet 600, control unit 13_2 reads the first position and posture data, the second position and posture data associated with the target inspection device, and the fourth position and posture data from position database 132d. Control unit 13_2 determines the read first position and posture data, second position and posture data, and fourth position and posture data as the first mark data, the second mark data, and the third target data, respectively. Control unit 13_2 outputs the first mark data, the second mark data, and the third target data to automatic conveyance instruction unit 14. Furthermore, control unit 13_2 designates conveyance robot 200_1 in which semiconductor wafer set 5A is not placed on both of racks 205, 208 as the output destination of the conveyance instruction. Thus, automatic conveyance instruction unit 14 outputs, to conveyance robot 200_1 in which semiconductor wafer set 5A is not placed on both of racks 205, 208, the conveyance instruction to which the first mark data, the second mark data, and the third target data are attached.

As a result, processor 201 of conveyance robot 200_1 that receives the conveyance instruction moves autonomous traveling robot 210 to the first mark position and posture indicated by the first mark data. After reaching the first mark position and posture, processor 201 causes manipulator 220 to execute the collection operation collecting semiconductor wafer set 5A into rack 205. Then, processor 201 moves autonomous traveling robot 210 to the second mark position and posture indicated by the second mark data. After reaching the second mark position and posture, processor 201 causes manipulator 220 to execute the collection operation of collecting inspected semiconductor wafer set 5A placed in the target inspection device to rack 208 before executing the operation of distributing semiconductor wafer set 5A to the target inspection device. Thereafter, processor 201 causes manipulator 220 to execute the operation of distributing semiconductor wafer set 5A from rack 205 to the target inspection device. After the completion of the distribution operation, processor 201 moves autonomous traveling robot 210 to the third mark position and posture indicated by the third mark data (fourth position and posture data) corresponding to storage cabinet 1000 that is the distribution place of inspected semiconductor wafer set 5A. After autonomous traveling robot 210 reaches the third mark position and posture, processor 201 causes manipulator 220 to execute the distribution operation of distributing inspected semiconductor wafer set 5A to storage cabinet 1000.

When inspected semiconductor wafer set 5A is not attached to the target inspection device, control unit 13_2 outputs the first mark data and the second mark data to automatic conveyance instruction unit 14 similarly to control unit 13.

### <Fourth modification>

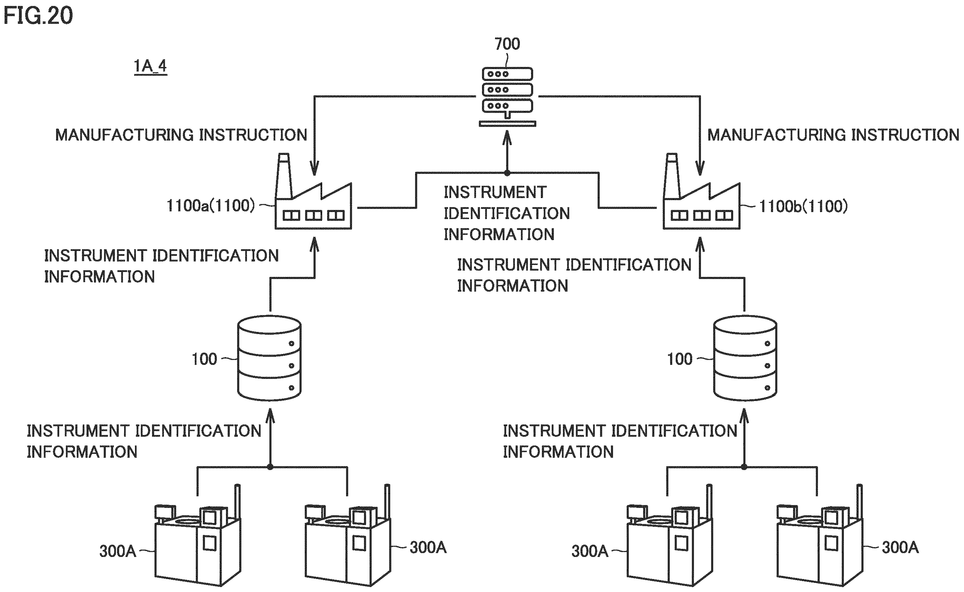

Fig. 20 is a schematic diagram illustrating a conveyance system according to a fourth modification. As illustrated in Fig. 20, a conveyance system 1A_4 of the fourth modification includes MES server 700 and a plurality of production bases 1100 (1100a, 1100b). In each of the plurality of production bases 1100, instruction server 100, at least one conveyance robot 200, the plurality of inspection devices 300A, and storage cabinet 600 are disposed. Instruction server 100 of each of the plurality of production bases 1100 outputs the instrument identification information acquired from the plurality of inspection devices 300A to MES server 700. Instruction server 100 may output, to MES server 700, the latest status information acquired from the plurality of inspection devices 300A and latest storage database 61 managed by storage cabinet 600.

MES server 700 may modify the production plan of the plurality of production bases 1100 based on the instrument identification information obtained from the plurality of production bases 1100.

For example, MES server 700 modifies the production plan of each production base 1100 so as to lower the replacement frequency of probe card 350A in the plurality of inspection devices 300A. Specifically, when production base 1100b has the production plan of semiconductor wafer set 5A of the type corresponding to the type of probe card 350A attached to inspection device 300A disposed in production base 1100a, MES server 700 changes the production plan from production base 1100b to production base 1100a. Thus, in production base 1 100a, the replacement frequency of probe card 350A decreases.

### <Fifth modification>

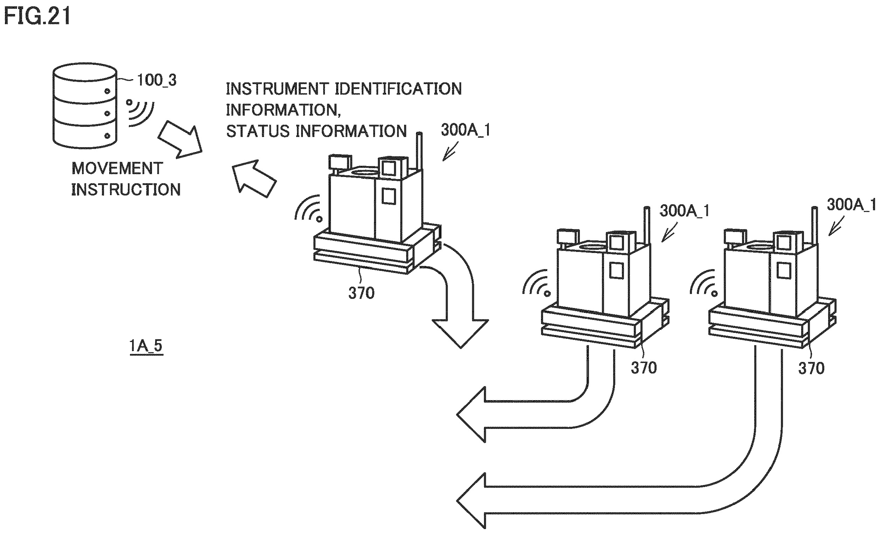

Fig. 21 is a schematic diagram illustrating a conveyance system according to a fifth modification. As illustrated in Fig. 21, a conveyance system 1A_5 of the fifth modification is different from conveyance system 1A in Fig. 2 in that conveyance system 1A_5 includes an instruction server 100_3 and a plurality of inspection devices 300A_1 instead of instruction server 100 and the plurality of inspection devices 300A. Inspection device 300A_1 is different from inspection device 300A in that inspection device 300A_1 includes an autonomous traveling robot 370. That is, each of the plurality of inspection devices 300A_1 is movable by autonomous traveling robot 370.

Autonomous traveling robot 370 provided in each inspection device 300A_1 moves according to the movement instruction from instruction server 100_3. When autonomous traveling robot 370 moves, layouts of the plurality of inspection devices 300A_1 are easily changed.

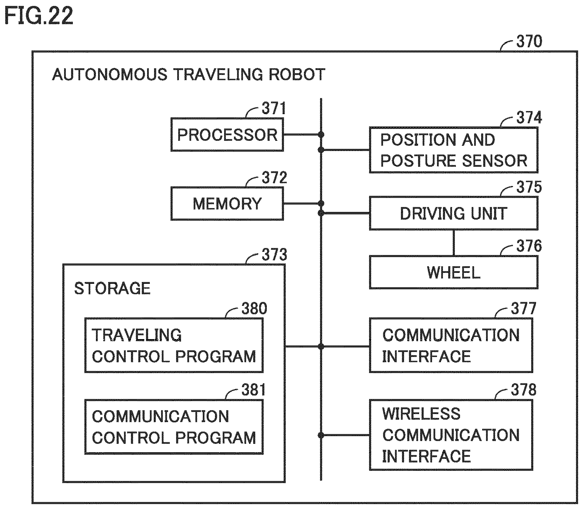

Fig. 22 is a schematic diagram illustrating an example of a hardware configuration of an autonomous traveling robot of the fifth modification. As illustrated in Fig. 22, autonomous traveling robot 370 includes a processor 371, a memory 372, a storage 373, a position and posture sensor 374, a driving unit 375, at least two wheels 376, a communication interface 377, and a wireless communication interface 378.

Processor 371 includes a CPU or an MPU. For example, memory 372 is configure of a volatile storage device such as a DRAM or an SRAM. For example, storage 373 is configured of the non-volatile storage device such as an HDD or an SSD. Processor 371 develops a program stored in storage 373 on a memory, and executes the program, thereby implementing various pieces of processing of the embodiment.

Storage 373 stores a traveling control program 380 and a communication control program 381.

Position and posture sensor 374 measures the position and posture of autonomous traveling robot 370 using a known technique. For example, a self-localization method based on a measurement result of a surrounding environment by light detection and ranging (Lidar), a GPS, a beacon positioning method, an azimuth sensor, and the like can be applied to position and posture sensor 374.

Driving unit 375 drives at least two wheels 376 according to the operation amount generated by processor 371. When at least two wheels 376 are driven at the same speed, autonomous traveling robot 370 travels forward or backward. When at least two wheels 376 are driven at different speeds, autonomous traveling robot 370 turns. Processor 371 may turn autonomous traveling robot 370 by changing the direction of wheel 376.

Communication interface 377 exchanges the data with the external device (including inspection device 300A_1) through communication means such as the communication cable or optical data communication. Wireless communication interface 378 exchanges the data with the external device (including the instruction server 100_3) using the wireless communication.

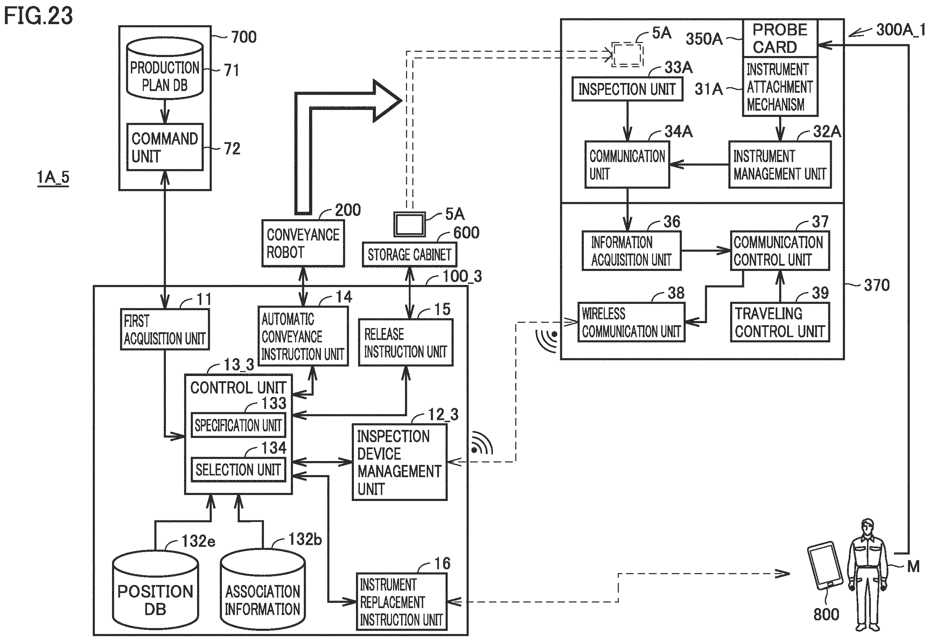

Fig. 23 is a schematic diagram illustrating functional configurations of an instruction server and an inspection device of the conveyance system of the fifth modification.

Command unit 72 of MES server 700 outputs a layout change command to instruction server 100_3 in addition to the inspection command. A data set corresponding to each of at least one inspection device 300A_1 that becomes a layout change target is attached to the layout change command. The data set includes a device ID identifying inspection device 300A_1 and fourth mark data indicating a mark position and posture. For example, the data set is generated in response to input by an administrator. Alternatively, the data set may be generated by a device layout optimization algorithm configured by artificial intelligence (AI) or the like.

Autonomous traveling robot 370 includes an information acquisition unit 36, a communication control unit 37, a wireless communication unit 38, and a traveling control unit 39. Information acquisition unit 36 is implemented by communication interface 377. Wireless communication unit 38 is implemented by wireless communication interface 378. Communication control unit 37 is implemented by processor 371 executing communication control program 381. Traveling control unit 39 is implemented by processor 371 executing traveling control program 380.

Information acquisition unit 36 acquires the instrument identification information and the status information from communication unit 34A. In the fifth modification, communication unit 34A outputs the instrument identification information and the status information to autonomous traveling robot 370 instead of instruction server 100_3.

Traveling control unit 39 controls driving unit 375 (see Fig. 22) according to the movement instruction received by wireless communication unit 38 from instruction server 100_3, and changes the position and posture of autonomous traveling robot 370. Fifth position and posture data indicating the mark position and posture is attached to the movement instruction. Traveling control unit 39 controls driving unit 375 such that the position and posture measured by position and posture sensor 374 approaches the mark position and posture indicated by the fifth position and posture data attached to the movement instruction. Thus, inspection device 300A_1 moves.

In addition, traveling control unit 39 outputs sixth position and posture data indicating the position and posture measured by position and posture sensor 374 to communication control unit 37.

Communication control unit 37 controls wireless communication unit 38. When wireless communication unit 38 receives the movement instruction from instruction server 100_3, communication control unit 37 outputs the movement instruction to traveling control unit 39.

Furthermore, when wireless communication unit 38 receives the information request from instruction server 100_3, communication control unit 37 controls wireless communication unit 38 to transmit, to instruction server 100_3, i) the latest instrument identification information and the latest status information acquired by information acquisition unit 36 and ii) the latest sixth position and orientation data output from traveling control unit 39.

Instruction server 100_3 is different from instruction server 100 in Fig. 6 in including an inspection device management unit 12_3, a control unit 13_3, and a position database 132e instead of second acquisition unit 12, control unit 13, and position database 132a. Instruction server 100_3 has a hardware configuration similar to that of instruction server 100 in Fig. 4. Inspection device management unit 12_3 is implemented by wireless communication interface 105. Control unit 13_3 is implemented by processor 101 executing conveyance instruction program 131.

Position database 132e is different from position database 132a in Fig. 6 in that the position database 132e includes relative position and orientation data instead of the second position and orientation data associated with each of the plurality of inspection devices 300A.

Relative position and posture data indicates the relative position and posture to be taken by autonomous traveling robot 210 with respect to inspection device 300A_1 when manipulator 220 accesses the holding member of inspection device 300A_1.

Inspection device management unit 12_3 receives the data set including the device ID and the fifth position and posture data from control unit 13 3. Upon receiving the data set, inspection device management unit 12_3 outputs, to inspection device 300A_1 identified by the device ID, the movement instruction to the mark position and posture indicated by the fifth position and posture data.

Furthermore, inspection device management unit 12_3 requests the information to autonomous traveling robot 370 of each of the plurality of inspection devices 300A_1, and acquires the latest instrument identification information, the latest status information, and the latest sixth position and posture data from each autonomous traveling robot 370. Inspection device management unit 12_3 requests the information to the plurality of autonomous traveling robots 370 in response to the request instruction from control unit 13_3.

Control unit 13_3 is different from control unit 13 in Fig. 6 in that control unit 13_3 outputs at least one data set to inspection device management unit 12_3, that control unit 13_3 outputs the request instruction to inspection device management unit 12_3 instead of second acquisition unit 12, and that control unit 13_3 generates the second mark data using the relative position and posture data instead of the second position and posture data.

When first acquisition unit 11 receives the layout change command, control unit 13_3 outputs at least one data set attached to the layout change command to inspection device management unit 12_3. Thus, the movement instruction is output to corresponding inspection device 300A_1 according to each data set.

Control unit 13_3 outputs the request instruction to inspection device management unit 12_3 in response to the acceptance of the inspection command by first acquisition unit 11. Thus, inspection device management unit 12_3 acquires the instrument identification information, the status information, and the sixth position and posture data from autonomous traveling robot 370 of each of the plurality of inspection devices 300A_1.

Control unit 13_3 calculates the position and posture to be taken by autonomous traveling robot 210 when manipulator 220 accesses the holding member of the target inspection device using the sixth position and posture data acquired from autonomous traveling robot 210 of the target inspection device and the relative position and posture data included in position database 132e. That is, control unit 13_3 calculates the position and posture to be taken by autonomous traveling robot 210 by adding the relative position and posture indicated by the relative position and posture data to the position and posture indicated by the sixth position and posture data. Control unit 13_3 generates the data indicating the calculated position and posture as the second mark data.

According to the fifth modification, even when the layout of inspection device 300A_1 is changed, conveyance robot 200 can convey semiconductor wafer set 5A from storage cabinet 600 to the target inspection device.

Depending on the accuracy of the stop positions of autonomous traveling robots 210, 370, there is a possibility that the distribution operation of semiconductor wafer set 5A to inspection device 300A_1 by manipulator 220 is not normally executed.

Accordingly, preferably the operation of manipulator 220 is corrected according to the actual stop positions of autonomous traveling robots 210, 370. For example, a camera is attached to manipulator 220, and an alignment mark is attached to a predetermined position of inspection device 300A_1. For example, the alignment mark may be attached to autonomous traveling robot 370 of inspection device 300A_1. Processor 201 of conveyance robot 200 corrects the second teaching data for the distribution operation by the difference between the position of the alignment mark calculated based on the image obtained from the camera and a first reference position in response to autonomous traveling robot 210 reaching the second mark position posture. The second teaching data is produced such that manipulator 220 can access the holding member of inspection device 300A_1 including autonomous traveling robot 370 when autonomous traveling robot 370 is stopped such that the alignment mark is located at the first reference position. Accordingly, the frequency at which the distribution operation of semiconductor wafer set 5A to inspection device 300A_1 by manipulator 220 fails can be reduced by correcting the second teaching data by the above-described difference.

Alternatively, processor 201 of conveyance robot 200 may correct the second mark position and posture according to the actual stop position of autonomous traveling robot 370. For example, a characteristic object (L-shaped plate, triangular plate, and the like) is provided at a predetermined position of inspection device 300A_1. For example, the characteristic object may be provided in autonomous traveling robot 370 of inspection device 300A_1. Furthermore, a characteristic object detection sensor that detects the position of the characteristic object is provided in autonomous traveling robot 210. Processor 201 of conveyance robot 200 adjusts the position and posture of autonomous traveling robot 210 by the difference between the position detected by the characteristic object detection sensor and a second reference position in response to autonomous traveling robot 210 reaching the second mark position and posture. The second reference position is a position of the characteristic object detected by the characteristic object detection sensor when manipulator 220 can access the holding member of inspection device 300A_1 including autonomous traveling robot 370. Accordingly, by adjusting the position and posture of autonomous traveling robot 210 by the above-described difference, the frequency at which the distribution operation of semiconductor wafer set 5A to inspection device 300A_1 by manipulator 220 fails can be reduced.

### §3 Second specific example

### <Outline of second specific example>

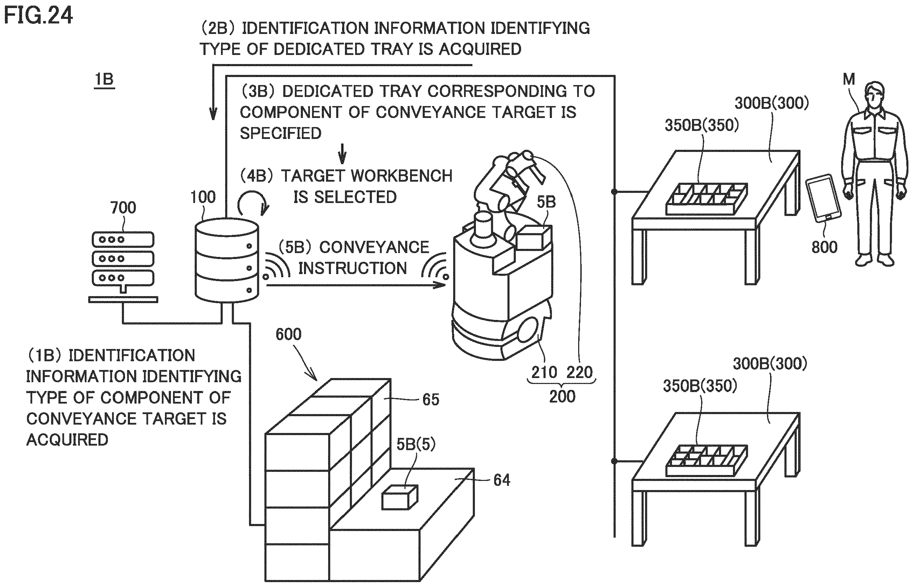

Fig. 24 is a view illustrating a conveyance system according to a second specific example of the embodiment. As illustrated in Fig. 24, a conveyance system 1B of the second specific example conveys a component 5B constituting a product as article 5 of the conveyance target. Conveyance system 1B includes a plurality of workbenches 300B as the plurality of devices 300. On workbench 300B, a dedicated tray 350B accommodating a component is installed as instrument 350. In workbench 300B, a product is assembled using component 5B accommodated in dedicated tray 350B. The assembly of the product may be performed by the worker or may be performed by the robot.

Dedicated tray 350B is designed so as to be able to accommodate the corresponding number of components 5B of the corresponding type. Accordingly, using dedicated tray 350B, an error (loss, wrong assembly, and the like) in the type, the number, and the like of component 5B constituting the product can be prevented.

Furthermore, similarly to conveyance system 1A of the first specific example, conveyance system 1B includes MES server 700 communicably connected to instruction server 100. MES server 700 of the second specific example manages production of a product. In the second specific example, MES server 700 outputs a production instruction of the product to instruction server 100 according to a production plan produced in advance.

Instruction server 100 of the second specific example executes processing related to conveyance of component 5B to workbench 300B.

Specifically, instruction server 100 causes component 5B of the conveyance target to be released from storage cabinet 600 in response to the manufacturing command from MES server 700. Thereafter, instruction server 100 transmits, to conveyance robot 200, the conveyance instruction to convey component 5B placed on table 64 to workbench 300B. Thus, conveyance robot 200 conveys component 5B placed on table 64 to the workbench 300B according to the conveyance instruction. Conveyed component 5B is accommodated in dedicated tray 350B installed in workbench 300B. In workbench 300B, the product is assembled from components 5B using dedicated tray 350B.

As described above, dedicated tray 350B is used according to the type of component 5B in order to prevent errors in the type, the number, and the like of components 5B constituting the product. For this reason, component 5B of the conveyance target needs to be conveyed to workbench 300B on which dedicated tray 350B corresponding to the type is installed. Accordingly, instruction server 100 executes the pieces of processing of steps (1B) to (5B).

First, instruction server 100 acquires the type identification information identifying the type of component 5B of the conveyance target (step (1B)).

Subsequently, instruction server 100 acquires the instrument identification information identifying the type of dedicated tray 350B installed in each of the plurality of workbench 300B (step (2B)).

Subsequently, instruction server 100 specifies the type of dedicated tray 350B associated with the type identified by the type identification information using the association information in which the type of component 5B is associated with the type of dedicated tray 350B for performing the assembly of the product using component 5B of the type (step (3B)). That is, instruction server 100 specifies dedicated tray 350B corresponding to component 5B of the conveyance target.

Subsequently, instruction server 100 uses the instrument identification information to select workbench 300B on which dedicated tray 350B of the specified type is installed as the target workbench among the plurality of workstations 300B (step (4B)).

Instruction server 100 outputs, to conveyance robot 200, the instruction (conveyance instruction) to convey component 5B of the conveyance target to the target workbench (step (5B)).

### <Functional configuration>

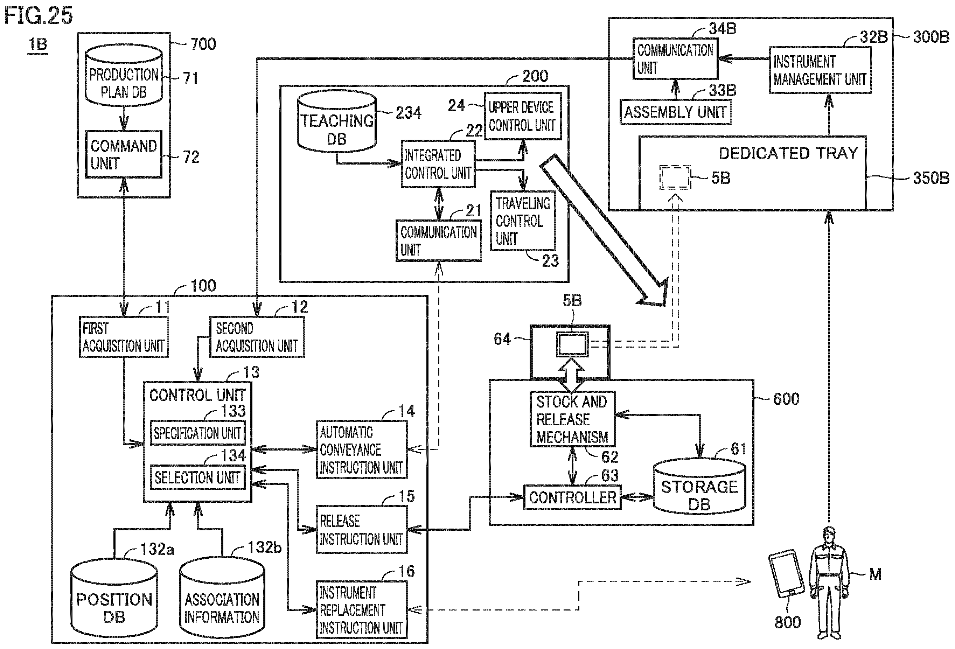

Fig. 25 is a schematic diagram illustrating an example of a functional configuration of the conveyance system in Fig. 24.

### (Workbench)

Workbench 300B includes an instrument management unit 32B, an assembly unit 33B, and a communication unit 34B.

Instrument management unit 32B manages instrument identification information identifying the type of dedicated tray 350B installed on workbench 300B. For example, instrument management unit 32B acquires instrument identification information by reading a code (a two-dimensional code or a barcode) attached to dedicated tray 350B. In this case, the code attached to dedicated tray 350B indicates the type of dedicated tray 350B. Alternatively, instrument management unit 32B may acquire the instrument identification information by reading a RFID tag attached to dedicated tray 350B.

Assembly unit 33B assembles a product using components 5B accommodated in dedicated tray 350B. For example, assembly unit 33B includes an assembly robot. Assembly unit 33B generates status information indicating a work status. The status information includes information indicating whether the product is being assembled or whether next component 5B is being put on standby.

In response to a request from instruction server 100, communication unit 34B transmits the latest instrument identification information managed by instrument management unit 32B and the latest status information generated by assembly unit 33B to instruction server 100.

### (Storage cabinet)

Storage cabinet 600 has a configuration similar to that of the first specific example. However, in storage database 61, the type identification information identifying the type of component 5B stored in corresponding storage space 65 is described in field 61c (see Fig. 7). In addition, stock and release mechanism 62 is different from that of the first specific example in that the stock operation and the release operation of component 5B are performed instead of semiconductor wafer set 5A. The processing content of controller 63 is similar to that in the first specific example.

### (MES server)

MES server 700 has a configuration similar to that of the first specific example. However, command unit 72 outputs the manufacturing command of the product configured by components 5B to instruction server 100 based on production plan database 71. The type identification information identifying the type of component 5B constituting the product that becomes the manufacturing target is attached to the manufacturing command.

### (Conveyance robot)

Conveyance robot 200 has a configuration similar to that of the first specific example. However, conveyance robot 200 conveys not semiconductor wafer set 5A but component 5B to workbench 300B. Accordingly, the first teaching data included in teaching database 234 indicates the driving procedure picking component 5B placed on table 64 of storage cabinet 600 and placing component 5B in rack 205. The second teaching data included in teaching database 234 indicates the driving procedure picking component 5B placed on rack 205 and placing component 5B on workbench 300B.

### (Instruction server)

Instruction server 100 has the same configuration as the first specific example. However, position database 132a includes the second position and posture data associated with each of the plurality of workbenches 300B instead of the second position and posture data associated with each of the plurality of inspection devices 300A. The second position and posture data indicates the position and posture to be taken by autonomous traveling robot 210 when manipulator 220 accesses corresponding workbench 300B.

In addition, association information 132b associates not the type of semiconductor wafer set 5A but the type of component 5B with the type of dedicated tray 350B used when the product including component 5B of the type is assembled.

First acquisition unit 11 is different from that of the first specific example in that first acquisition unit 11 receives the manufacturing command from MES server 700. As described above, the type identification information identifying the type of component 5B constituting the product that becomes the manufacturing target is attached to the manufacturing command. For this reason, first acquisition unit 11 acquires the type identification information identifying the type of component 5B of the conveyance target.

Second acquisition unit 12 is different from that of the first specific example in that second acquisition unit 12 requests the information to a plurality of workbenches 300B instead of the plurality of inspection devices 300A, and acquires the instrument identification information identifying the type of dedicated tray 350B installed on workbench 300B and the status information indicating the work status for each of the plurality of workbenches 300B.

Release instruction unit 15 is different from that of the first specific example in that release instruction unit 15 outputs the release instruction to which the type identification information identifying the type of component 5B is attached instead of semiconductor wafer set 5A.

Instrument replacement instruction unit 16 is different from that of the first specific example in that instrument replacement instruction unit 16 outputs the instrument replacement instruction to replace dedicated tray 350B installed on workbench 300B identified by the device ID received from control unit 13 with dedicated tray 350B of the type identified by the instrument identification information received from control unit 13.

Control unit 13 controls operations of second acquisition unit 12, automatic conveyance instruction unit 14, release instructing unit 15, and instrument replacement instructing unit 16 in response to the reception of the manufacturing command by first acquisition unit 11. A method for controlling each unit by control unit 13 is the same as that in the first specific example except for the following three points.
- Type identification information identifying the type of component 5B is used instead of semiconductor wafer set 5A.
- Instrument identification information identifying the type of dedicated tray 350B is used instead of probe card 350A.
- The status information indicating the work status of workbench 300B is used instead of inspection device 300 A.

The processing flow of instruction server 100, workbench 300B, storage cabinet 600, and conveyance robot 200 is according to the flowchart illustrated in Figs. 9 to 12 described in the first specific example except for the above three points.

### <Advantages>

According to the second specific example, conveyance robot 200 conveys component 5B of the conveyance target to workbench 300B on which dedicated tray 350B of a type corresponding to the type of component 5B is installed. Thus, the labor of conveying by the conventional worker is reduced. As a result, the efficient conveyance of component 5B can be implemented.

For example, in an automobile, a construction machine, or the like, malfunction due to the wrong assembly of component 5B is not permitted in consideration of safety of a user. Accordingly, conveyance system 1B of the second specific example is applied to the production site such as the automobile and the construction machine. For example, component 5B in such the production site includes components such as a brake, a gear box, and a hydraulic pump.

### <Modification>

The first, second, fourth, and fifth modifications described in the first specific example are also applied to conveyance system 1B of the second specific example.

In addition, storage cabinet 600 may not include stock and release mechanism 62. In this case, the worker may release component 5B from storage cabinet 600 to table 64, and input the manufacturing command to which the type identification information identifying the type of released component 5B is attached to instruction server 100. Because component 5B is released from storage cabinet 600, instruction server 100 does not need to output the release instruction. Accordingly, instruction server 100 may not include release instruction unit 15.

### §4 Third specific example

### <Outline of third specific example>

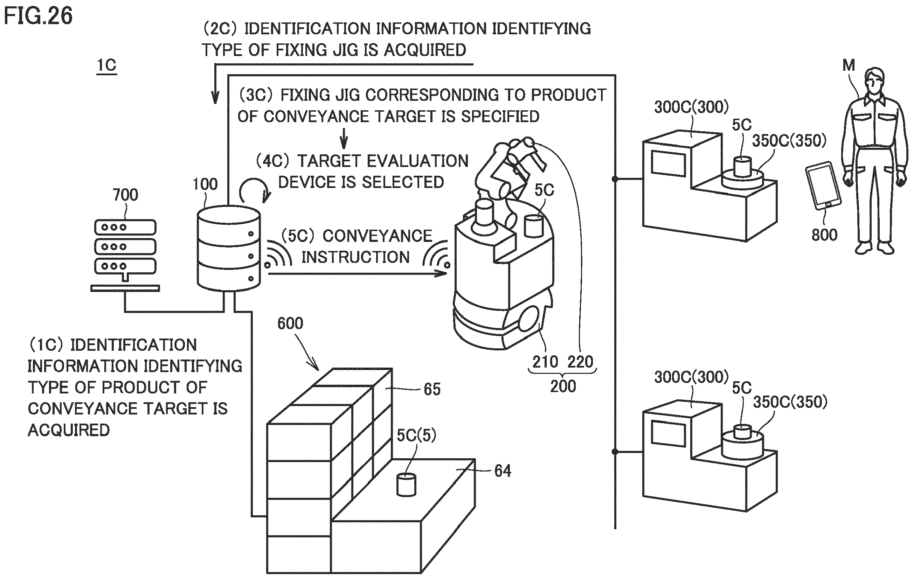

Fig. 26 is a view illustrating a conveyance system according to a third specific example of the embodiment. As illustrated in Fig. 26, a conveyance system 1C of the third specific example conveys assembled product 5C as article 5 of the conveyance target. Conveyance system 1C includes a plurality of evaluation devices 300C as the plurality of devices 300. In evaluation device 300C, a fixing jig 350C is installed as instrument 350. Evaluation device 300C evaluates performance of product 5C fixed by fixing jig 350C.

Evaluation device 300C evaluates the performance of product 5C existing at a predetermined reference height and reference position. Fixing jig 350C is used to fix product 5C to the reference height and the reference position. Product 5C has different sizes depending on respective product types. For this reason, different types of fixing jigs 350C need to be used depending on the types of the products 5C.

Further, similarly to conveyance system 1A of the first specific example, conveyance system 1C includes MES server 700 communicably connected to instruction server 100. MES server 700 of the third specific example manages manufacturing of product 5C. In specific example 3, the MES server 700 outputs a performance evaluation command of the product 5C to the instruction server 100 according to a production plan created in advance.

Instruction server 100 of the third specific example executes the processing related to the conveyance of product 5C to evaluation device 300C.

Specifically, instruction server 100 causes product 5C that becomes the conveyance target (evaluation target) to be released from storage cabinet 600 in response to the performance evaluation command from MES server 700. Thereafter, instruction server 100 transmits, to conveyance robot 200, the conveyance instruction to convey product 5C placed on table 64 to evaluation device 300C. Thus, conveyance robot 200 conveys product 5C placed on table 64 to evaluation device 300C in response to the conveyance instruction. Conveyed product 5C is fixed by fixing jig 350C installed in the evaluation device 300C. Evaluation device 300C evaluates performance of product 5C fixed by fixing jig 350C.

As described above, the different types of fixing jigs 350C need to be used depending on the types of products 5C. For this reason, product 5C that becomes the conveyance target needs to be conveyed to evaluation device 300C in which fixing jig 350C corresponding to the type is installed. Accordingly, instruction server 100 executes the pieces of processing of steps (1C) to (5C).

First, instruction server 100 acquires the type identification information identifying the type of product 5C of the conveyance target (step (1C)).

Subsequently, instruction server 100 acquires the instrument identification information identifying the type of fixing jig 350C installed in each of the plurality of evaluation devices 300C (step (2C)).

Subsequently, instruction server 100 uses the association information in which the type of product 5C is associated with the type of fixing jig 350C used for evaluating the performance of product 5C of the type to specify the type of fixing jig 350C associated with the type identified by the type identification information (step (3C)). That is, instruction server 100 specifies fixing jig 350C corresponding to product 5C of the conveyance target.

Subsequently, instruction server 100 selects evaluation device 300C in which fixing jig 350C of the specified type is installed as the target evaluation device among the plurality of evaluation devices 300C using the instrument identification information (step (4C)).

Instruction server 100 outputs, to conveyance robot 200, the instruction (conveyance instruction) to convey product 5C of the conveyance target to the target evaluation device (step (5C)).

### <Functional configuration>

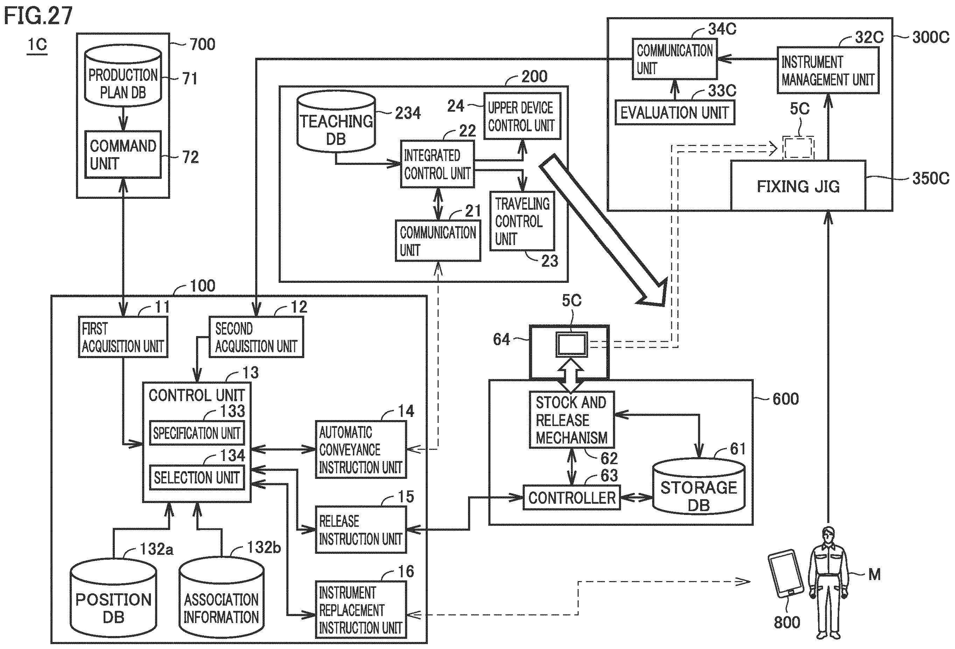

Fig. 27 is a schematic diagram illustrating an example of a functional configuration of the conveyance system in Fig. 26.

### (Evaluation device)

Evaluation device 300C includes an instrument management unit 32C, an evaluation unit 33C, and a communication unit 34C.

Instrument management unit 32C manages the instrument identification information identifying the type of fixing jig 350C installed in evaluation device 300C. For example, instrument management unit 32C acquires the instrument identification information by reading a code (a two-dimensional code or a barcode) attached to fixing jig 350C. In this case, the code attached to fixing jig 350C indicates the type of fixing jig 350C. Alternatively, instrument management unit 32C may acquire the instrument identification information by reading a RFID tag attached to fixing jig 350C.

Evaluation unit 33C evaluates the performance of product 5C fixed by fixing jig 350C. For example, when product 5C is a laser range finder, evaluation unit 33C evaluates whether the measurement result by the laser range finder is within a reference range. The reference range is previously set according to the reference height and the reference position where product 5C fixed by fixing jig 350C exists.

Evaluation unit 33C generates status information indicating an evaluation status. The status information includes information indicating whether the performance of product 5C is being evaluated or whether next product 5C is being input on standby.

In response to the request from instruction server 100, communication unit 34C transmits the latest instrument identification information managed by instrument management unit 32C and the latest status information generated by evaluation unit 33C to instruction server 100.

### (Storage cabinet)

Storage cabinet 600 has a configuration similar to that of the first specific example. However, in storage database 61, the type identification information identifying the type of product 5C stored in corresponding storage space 65 is described in field 61c (see Fig. 7). In addition, stock and release mechanism 62 is different from that of the first specific example in that the stock operation and the release operation of product 5C are performed instead of semiconductor wafer set 5A. The processing content of controller 63 is similar to that in the first specific example.

### (MES server)

MES server 700 has a configuration similar to that of the first specific example. However, command unit 72 outputs an evaluation command of the performance of product 5C to instruction server 100 based on production plan database 71. The type identification information identifying the type of product 5C that becomes the evaluation target is attached to the evaluation command.

### (Conveyance robot)

Conveyance robot 200 has a configuration similar to that of the first specific example. However, conveyance robot 200 conveys not semiconductor wafer set 5A but product 5C to evaluation device 300C. For this reason, the first teaching data included in teaching database 234 indicates the driving procedure picking product 5C placed on table 64 of storage cabinet 600 and placing product 5C in rack 205. The second teaching data included in teaching database 234 indicates the driving procedure picking product 5C placed on rack 205 and placing product 5C in fixing jig 350C of evaluation device 300C.

### (Instruction server)

Instruction server 100 has the same configuration as the first specific example. However, position database 132a includes the second position and posture data associated with each of the plurality of evaluation devices 300C instead of the second position and posture data associated with each of the plurality of inspection devices 300A. The second position and posture data indicates the position and posture to be taken by autonomous traveling robot 210 when manipulator 220 accesses the reference height and the reference position of corresponding evaluation device 300C.

Association information 132b associates not the type of semiconductor wafer set 5A but the type of product 5C with the type of fixing jig 350C used when the performance of product 5C of the type is evaluated.

First acquisition unit 11 is different from the first specific example in that first acquisition unit 11 receives the evaluation command from MES server 700. As described above, the type identification information identifying the type of product 5C that becomes the evaluation target is attached to the evaluation command. Accordingly, first acquisition unit 11 acquires the type identification information identifying the type of product 5C of the conveyance target (evaluation target).

Second acquisition unit 12 is different from the first specific example in that the information is requested from the plurality of evaluation devices 300C instead of the plurality of inspection devices 300A, and that the instrument identification information identifying the type of fixing jig 350C and the status information indicating the evaluation status are acquired from each of the plurality of evaluation devices 300C.

Release instruction unit 15 is different from that of the first specific example in that release instruction unit 15 outputs a release instruction to which the type identification information identifying the type of product 5C is attached instead of semiconductor wafer set 5A.

Instrument replacement instruction unit 16 is different from that of the first specific example in that instrument replacement instruction unit 16 outputs an instrument replacement instruction to replace fixing jig 350C installed in evaluation device 300C identified by the device ID received from control unit 13 with fixing jig 350C of the type identified by the instrument identification information received from control unit 13.

Control unit 13 controls operations of second acquisition unit 12, automatic conveyance instruction unit 14, release instructing unit 15, and instrument replacement instructing unit 16 in response to the reception of the evaluation command by first acquisition unit 11. A method for controlling each unit by control unit 13 is the same as that in the first specific example except for the following three points.
- The type identification information identifying the type of product 5C is used instead of semiconductor wafer set 5A.
- The instrument identification information identifying the type of fixing jig 350C is used instead of probe card 350A.
- The status information indicating the evaluation status of evaluation device 300C is used instead of inspection device 300A.

In addition, the processing flow of instruction server 100, evaluation device 300C, storage cabinet 600, and conveyance robot 200 follows the flowcharts in Figs. 9 to 12 described in the first specific example except for the above three points.

### <Advantages>

According to the third specific example, conveyance robot 200 conveys product 5C of the conveyance target to evaluation device 300C in which fixing jig 350C of the type corresponding to the type of product 5C is installed. Thus, the labor of conveying by the conventional worker is reduced. As a result, the efficient conveyance of product 5C can be implemented.

### <Modification>

The first to fifth modifications described in the first specific example are also applied to conveyance system 1C of the third specific example.

Evaluation device 300C may perform calibration of product 5C according to the evaluated performance. That is, evaluation device 300C may output the deviation of the evaluated performance from the predetermined reference performance.

In addition, storage cabinet 600 may not include stock and release mechanism 62. In this case, the worker may deliver product 5C from storage cabinet 600 to table 64, and input the evaluation command to which the type identification information identifying the type of released product 5C is attached to instruction server 100. Because product 5C is released from storage cabinet 600, instruction server 100 does not need to output the release instruction. Accordingly, instruction server 100 may not include release instruction unit 15.

### §5 Fourth specific example

### <Outline of fourth specific example>

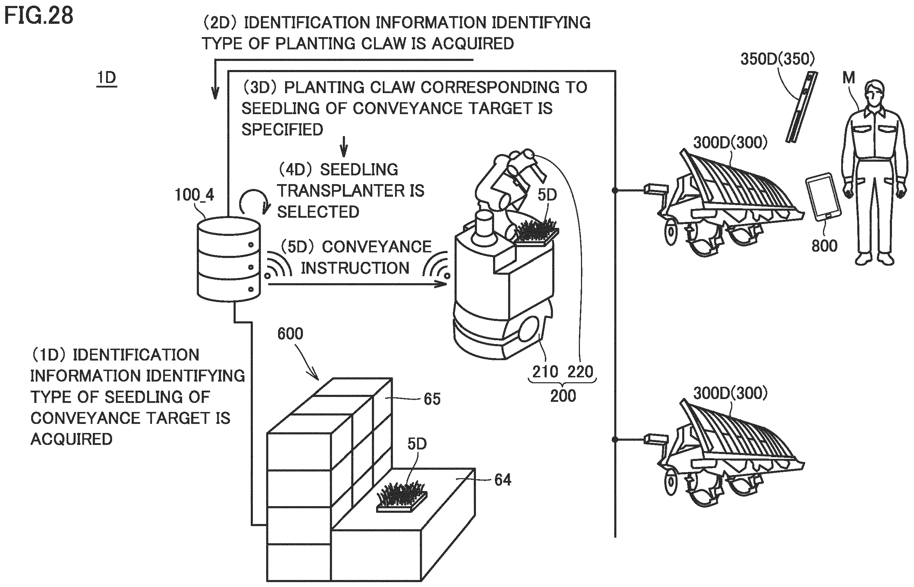

Fig. 28 is a view illustrating a conveyance system according to a fourth specific example of the embodiment. As illustrated in Fig. 28, a conveyance system 1D according to a fourth specific example conveys a seedling 5D as article 5 of the conveyance target. Conveyance system 1D includes a plurality of seedling transplanters 300D as the plurality of devices 300. In seedling transplanter 300D, a planting claw 350D is installed as instrument 350. Seedling transplanter 300D plants seedling 5D using planting claw 350D.

An instruction server 100_4 of the fourth specific example executes processing related to conveyance of seedling 5D to seedling transplanter 300D.

Specifically, instruction server 100_4 causes seedling 5D that becomes the conveyance target (planting target) to be released from storage cabinet 600 in response to a seedling transplanting start command. Instruction server 100_4 is connected to an input device (keyboard, mouse, and the like), and receives the seedling transplanting start command from the input device.

Instruction server 100_4 transmits, to conveyance robot 200, the conveyance instruction to convey seedling 5D placed on table 64 to seedling transplanter 300D. Accordingly, conveyance robot 200 conveys seedling 5D placed on table 64 to seedling transplanter 300D in response to the conveyance instruction. Conveyed seedling 5D is fixed by planting claw 350D installed in seedling transplanter 300D. Seedling transplanter 300D plants seedling 5D in a field using installed planting claw 350D.

The different types of planting claws 350D need to be used depending on the types of seedlings 5D. For this reason, seedling 5D of the conveyance target needs to be conveyed to seedling transplanter 300D in which planting claw 350D corresponding to the type is installed. Accordingly, instruction server 100_4 executes the pieces of processing of steps (1D) to (5D).

First, instruction server 100_4 acquires type identification information identifying the type of seedling 5D of the conveyance target (step (1D)).

Subsequently, instruction server 100_4 acquires the instrument identification information identifying the type of planting claw 350D installed in each of a plurality of seedling transplanters 300D (step (2D)).

Subsequently, instruction server 100_4 specifies the type of planting claw 350D associated with the type identified by the type identification information using the association information associating the type of seedling 5D with the type of planting claw 350D used when seedling 5D of the type is used (step (3D)). That is, instruction server 100_4 specifies planting claw 350D corresponding to seedling 5D of the conveyance target.

Subsequently, instruction server 100_4 selects seedling transplanter 300D in which planting claw 350D of the specified type is installed among the plurality of seedling transplanters 300D as the target seedling transplanter using the instrument identification information (step (4D)).

Instruction server 100_4 outputs, to conveyance robot 200, the instruction (conveyance instruction) to convey seedling 5D of the conveyance target (step (5D)).

### <Functional configuration>

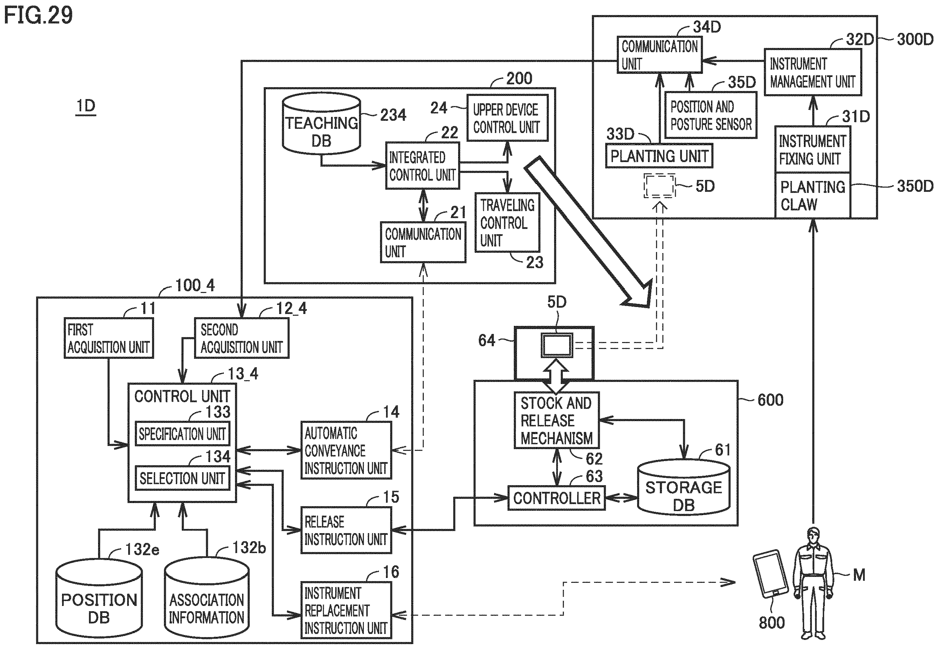

Fig. 29 is a schematic diagram illustrating an example of a functional configuration of the conveyance system in Fig. 28.

### (Seedling transplanter)

Seedling transplanter 300D includes an instrument fixing unit 31D, an instrument management unit 32D, a planting unit 33D, a communication unit 34D, and a position and posture sensor 35D.

Instrument fixing unit 31D holds planting claw 350D. Instrument management unit 32D manages the instrument identification information identifying the type of planting claw 350D fixed by instrument fixing unit 31D. For example, instrument management unit 32D acquires the instrument identification information by reading a code (a two-dimensional code or a barcode) attached to planting claw 350D. In this case, the code attached to planting claw 350D indicates the type of planting claw 350D. Alternatively, instrument management unit 32D may acquire the instrument identification information by reading a RFID tag attached to planting claw 350D.

Planting unit 33D plants seedling 5D in the field using planting claw 350D fixed by instrument fixing unit 31D. Planting unit 33D generates the status information indicating a planting status. The status information includes information indicating whether seedling 5D is being planted or whether next seedling 5D is being input on standby.

Position and posture sensor 35D measures the position and posture of seedling transplanter 300D using a known technique. For example, a self-localization method based on a measurement result of a surrounding environment by light detection and ranging (Lidar), a GPS, a beacon positioning method, an azimuth sensor, and the like can be applied to position and posture sensor 35D.

In response to the request from instruction server 100_4, communication unit 34D transmits the latest instrument identification information managed by instrument management unit 32D, latest status information generated by planting unit 33D, and latest seventh position and posture data indicating the position and posture measured by position and posture sensor 35D to instruction server 100_4.

### (Storage cabinet)

Storage cabinet 600 has a configuration similar to that of the first specific example. However, in storage database 61, the type identification information identifying the type of seedling 5D stored in corresponding storage space 65 is described in field 61c (see Fig. 7). In addition, stock and release mechanism 62 is different from that of the first specific example in that the stock operation and the release operation of seedling 5D are performed instead of semiconductor wafer set 5A. The processing content of controller 63 is similar to that in the first specific example.

### (Conveyance robot)

Conveyance robot 200 has a configuration similar to that of the first specific example. However, conveyance robot 200 conveys not semiconductor wafer set 5A but seedling 5D to seedling transplanter 300D. For this reason, the first teaching data included in teaching database 234 indicates the driving procedure picking seedling 5D placed on table 64 of storage cabinet 600 and placing seedling 5D in rack 205. The second teaching data included in teaching database 234 indicates the driving procedure picking seedling 5D placed on rack 205 and placing seedling 5D on the holding member of seedling transplanter 300D.

### (Instruction server)

Instruction server 100_4 is different from instruction server 100_3 in Fig. 23 in that instruction server 100_4 includes a control unit 13_4 and a second acquisition unit 12_4 instead of control unit 13_3 and inspection device management unit 12_3.

The relative position and posture data included in position database 132e of instruction server 100_4 indicates the relative position and posture to be taken by autonomous travel robot 210 with respect to seedling transplanter 300D when manipulator 220 accesses the holding member of seedling transplanter 300D.

Association information 132b associates not semiconductor wafer set 5A but the type of seedling 5D with the type of planting claw 350D used when seedling 5D of the type is planted.

First acquisition unit 11 is different from that of the first specific example in that first acquisition unit 11 receives the seedling transplanting start command from the input device. The type identification information identifying the type of seedling 5D that becomes the planting target is attached to the seedling transplanting start command. Accordingly, first acquisition unit 11 acquires the type identification information identifying the type of seedling 5D of the conveyance target (planting target).

The second acquisition unit 12_4 requests the information to the plurality of seedling transplanters 300D, and acquires the latest instrument identification information, the latest status information, and the latest seventh position and posture data from each seedling transplanter 300D. Second acquisition unit 12_4 requests the information to the plurality of seedling transplanters 300D in response to the request instruction from control unit 13_4.

Release instruction unit 15 is different from that of the first specific example in that release instruction unit 15 outputs the release instruction to which the type identification information identifying not the type of semiconductor wafer set 5A but the type of seedling 5D is attached.

Instrument replacement instruction unit 16 is different from the first specific example in that instrument replacement instruction unit 16 outputs the instrument replacement instruction to replace planting claw 350D installed in seedling transplanter 300D identified by the device ID received from control unit 13_4 with planting claw 350D of the type identified by the instrument identification information received from control unit 13_4.

Control unit 13_4 controls operations of second acquisition unit 12_4, automatic conveyance instruction unit 14, release instructing unit 15, and instrument replacement instructing unit 16 in response to acceptance of the seedling transplanting start command by first acquisition unit 11. The method for controlling each unit by control unit 13_4 is similar to the method of controlling control unit 13_3 in Fig. 23 except for the following four points.
- The type identification information identifying not the type of semiconductor wafer set 5A but the type of seedling 5D is used.
- The instrument identification information identifying not the type of probe card 350A but the type of planting claw 350D is used.
- The status information indicating not the inspection status of inspection device 300A but the planting status of seedling transplanter 300D is used.
- Not the sixth position and posture data acquired from the autonomous traveling robot 370, but the seventh position and orientation data acquired from seedling transplanter 300D is used.

In addition, the processing flow in instruction server 100_4, seedling transplanter 300D, storage cabinet 600, and conveyance robot 200 follows the flowcharts in Figs. 9 to 12 described in the first specific example except for the above four points.

### <Advantages>

According to the fourth specific example, conveyance robot 200 conveys seedling 5D of the conveyance target to seedling transplanter 300D in which the planting claw 350D of the type corresponding to the type of seedling 5D is installed. Thus, the labor of conveying by the conventional worker is reduced. As a result, the efficient conveyance of seedling 5D can be implemented.

### <Modification>

The first and second modifications described in the first specific example are also applied to conveyance system 1D of the fourth specific example.

In the above description, the position and posture of seedling transplanter 300D are measured by the position and posture sensor 35D included in seedling transplanter 300D. However, the position and posture of seedling transplanter 300D may be measured by another technique. For example, conveyance system 1D may include at least one camera that image a movement range of seedling transplanter 300D, and an arithmetic unit that measures the position and posture of seedling transplanter 300D by analyzing image data obtained from the camera and outputs the seventh position and posture data. The camera may be attached to a fixed pole disposed in the movement range, or attached to a drone capable of flying the movement range. The arithmetic unit outputs the latest seventh position and posture data to instruction server 100.

### §6 Appendix

As described above, the embodiment includes the following disclosure.

### (Configuration 1)

A conveyance system (1, 1A to 1D, 1A_1 to 1A_5) comprising:
a plurality of devices (300, 300A to 300D) configured to perform predetermined processing on an article (5, 5A to 5D);
a conveyance robot (200, 200_1); and
an instruction unit (100, 100_1 to 100_4),
wherein an instrument of a type arbitrarily selected from a plurality of types of instruments (350, 350A to 350D) is installed in each of the plurality of devices (300, 300A to 300D),
the predetermined processing is performed using the installed instrument (350, 350A to 350D) in each of the plurality of devices (300, 300A to 300D, 300A_1), and
the instruction unit (100, 100_1 to 100_4) includes:
   a first acquisition unit (11, 101) configured to acquire first identification information identifying a type of a conveyance target article (5, 5A to 5D);
   a second acquisition unit (12, 12_3, 12_4, 101) configured to acquire second identification information identifying a type of the instrument (350, 350A to 350D) installed in each of the plurality of devices (300, 300A to 300D, 300A_1);
   a specification unit (133, 101) configured to specify the type of the instrument associated with the type identified by the first identification information using association information (132b) associating the type of the article (5, 5A to 5D) with the type of the instrument (350, 350A to 350D) for performing the predetermined processing on the article (5, 5A to 5D) of the type;
   a selection unit (134, 101) configured to select a device in which the instrument of the specified type is installed as a target device among the plurality of devices (300, 300A to 300D, 300A_1) using the second identification information; and
   a first output unit (14, 101) configured to output, to the conveyance robot (200, 200_1), a conveyance instruction to convey the conveyance target article (5, 5A to 5D) to the target device.

### (Configuration 2)

The conveyance system (1, 1A to 1D, 1A_1 to 1A_5) described in configuration 1, wherein
the conveyance robot (200, 200_1) includes:
an autonomous traveling robot (210);
a first mechanism (220) that is mounted on the autonomous traveling robot (210) to deliver the article (5, 5A to 5D); and
a control unit (22 to 24, 22_1, 201) configured to control the autonomous traveling robot (210) and the first mechanism (220), and
the control unit (22 to 24, 22_1, 201), in response to the conveyance instruction,
   moves the autonomous traveling robot (210) to a first mark position and posture according to a collection place of the conveyance target article,
   causes the first mechanism (220) to execute a first collection operation collecting the conveyance target article after the autonomous traveling robot (210) reaches the first mark position and posture,
   moves the autonomous traveling robot to a second mark position and posture corresponding to the target device after completion of the first collection operation, and
   causes the first mechanism (220) to execute a first distribution operation distributing the conveyance target article to the target device after the autonomous traveling robot (210) reaches the second mark position and posture.

### (Configuration 3)

The conveyance system (1, 1A to 1D, 1A_1 to 1A_5) described in configuration 2, further comprising a storage cabinet (600) configured to be capable of storing a plurality of articles (5, 5A to 5D),
wherein the storage cabinet (600) includes a second mechanism (62) configured to release a designated article (5, 5A to 5D),
the first mark position and posture is determined according to a place of the article (5, 5A to 5D) released from the storage cabinet (600), and
the instruction unit (100, 100_1 to 100_4) further includes a second output unit (15, 101) configured to output, to the storage cabinet (600), a release instruction of the conveyance target article.

### (Configuration 4)

The conveyance system (1A_1, 1A_2) described in configuration 2, further comprising a shelf (500) on which a plurality of articles (5, 5A to 5D) can be placed,
wherein the shelf (500) includes:
   a plurality of placement portions (51a to 51c); and
   a first management unit (53) configured to manage management information (55) in which each of the plurality of placement portions (51a to 51c) is associated with a type of the placed article (5, 5A to 5D),
the first mark position and posture is determined according to a target placement portion on which the article (5, 5A to 5D) of the type identified by the first identification information is placed among the plurality of placement portions (51a to 51c), and
the target placement portion is specified from among the plurality of placement portions (51a to 51c) based on the management information (55).

### (Configuration 5)

The conveyance system (1A_1, 1A_2) described in configuration 4, further comprising a storage cabinet (600) in which a plurality of articles (5, 5A to 5D) can be stored,
wherein the storage cabinet (600) includes:
   a second management unit (63) configured to manage a type of each stored article (5, 5A to 5D); and
   a second mechanism (62) configured to release a designated article (5, 5A to 5D),
the shelf (500) further includes a detector (52a to 52c) configured to detect whether each of the plurality of placement portions (51a to 51c) is in a first state in which the article (5, 5A to 5D) is placed or in a second state in which the article (5, 5A to 5D) is not placed, and
the first management unit (53) updates the management information (55) such that a placement portion that changes first from the second state to the first state among the plurality of placement portions (51a to 51c) corresponds to the type of the designated article after the second mechanism (62) completes the release of the designated article (5, 5A to 5D).

### (Configuration 6)

The conveyance system (1A_2) described in configuration 5, further comprising a third mechanism (91) configured to move the article (5, 5A to 5D) released from the storage cabinet (600) to one placement portion in the second state among the plurality of placement portions (51a to 51c).

### (Configuration 7)

The conveyance system (1A_3) described in any one of configurations 2 to 6, wherein
the control unit (22 to 24, 22_1, 201):
causes the first mechanism (220) to execute a second collection operation collecting the article (5, 5A to 5D) that is placed on the target device and subjected to the predetermined processing after the autonomous traveling robot (210) reaches the second mark position and posture and before the first mechanism (220) is caused to execute the first distribution operation;
moves the autonomous traveling robot (210) to a third mark position and posture corresponding to a distribution place (1000) of the article (5, 5A to 5D) on which the predetermined processing is performed after completion of the first distribution operation; and
causes the first mechanism (220) to execute a second distribution operation distributing the article (5, 5A to 5D) on which the predetermined processing is performed to the distribution place after the autonomous traveling robot (210) reaches the third mark position and posture.

### (Configuration 8)

The conveyance system (1A_4) described in any one of configurations 1 to 7, further comprising a server (700) configured to output, to the instruction unit (100, 100_1 to 100_3), a performance command of the predetermined processing for the conveyance target article (5, 5A to 5D) according to a production plan,
wherein the server (700) modifies the production plan so as to reduce a replacement frequency of the instrument (350, 350A to 350C) in the plurality of devices (300, 300A to 300C, 300A_1) based on the second identification information.

### (Configuration 9)

The conveyance system (1A_5, 1D) described in configuration 2, wherein
each of the plurality of devices (300A_1, 300D) is movable, and
the second mark position and posture is determined according to a position and posture of the target device.

### (Configuration 10)

The conveyance system (1A_5, 1D) described in configuration 9, wherein
each of the plurality of devices (300A_1, 300D) has a mark provided at a predetermined position,
the conveyance robot (200) further includes a camera, and
the control unit (22 to 24, 22_1, 201):
   calculates a position of the mark based on an image obtained by imaging of the camera after the autonomous traveling robot (210) reaches the second mark position and posture; and
   corrects the first distribution operation by a difference between the calculated position of the mark and a reference position.

### (Configuration 11)

The conveyance system (1A_5, 1D) described in configuration 9, wherein
each of the plurality of devices (300A_1, 300D) includes a characteristic object provided at a predetermined position,
the conveyance robot (200) further includes a sensor configured to detect a position of the characteristic object, and
the control unit (22 to 24, 22_1,201) adjusts a position and posture of the autonomous traveling robot (210) by a difference between a position detected by the sensor and a reference position when the autonomous traveling robot reaches the second mark position and posture.

### (Configuration 12)

The conveyance system (1B) described in any one of configurations 1 to 11, wherein
the article is a component (5B) constituting a product,
the instrument is a tray (350B) accommodating the component, and
in the device (300B), the product is assembled using the component (5B) accommodated in the tray (350B).

### (Configuration 13)

The conveyance system (1C) described in any one of configurations 1 to 11, wherein
the instrument is a jig (350C) fixing the article, and
the device (300C) evaluates performance of the article (5C) fixed by the jig (350C).

### (Configuration 14)

The conveyance system (1D) described in any one of configurations 1 to 11, wherein
the article is a seedling (5D),
the instrument is a planting claw (350D) planting the seedling (5D), and
the device plants the seedling (5D) using the planting claw (350D).

### (Configuration 15)

A conveyance method in a conveyance system (1, 1A to 1D, 1A_1 to 1A_5),
the conveyance system (1, 1A to 1D, 1A_1 to 1A_5) including:
   a plurality of devices (300, 300A to 300D) configured to perform predetermined processing on an article (5, 5A to 5D); and
   a conveyance robot (200, 200_1),
an instrument of a type arbitrarily selected from a plurality of types of instruments (350, 350A to 350D) being installed in each of the plurality of devices (300, 300A to 300D),
the predetermined processing being performed using the installed instrument (350, 350A to 350D) in each of the plurality of devices (300, 300A to 300D),
the conveyance method comprising:
   acquiring first identification information identifying a type of a conveyance target article (5, 5A to 5D);
   acquiring second identification information identifying the type of the instrument (350, 350A to 350D) installed in each of the plurality of devices (300, 300A to 300D);
   specifying the type of the instrument (350, 350A to 350D) associated with the type identified by the first identification information using association information (132b) associating the type of the article (5, 5A to 5D) with the type of the instrument (350, 350A to 350D) performing the predetermined processing on the article (5, 5A to 5D) of the type;
   selecting a device in which the instrument (350, 350A to 350D) of the specified type is installed as a target device among the plurality of devices (300, 300A to 300D) using the second identification information; and
   outputting, to the conveyance robot (200, 200_1), a conveyance instruction to convey the conveyance target article (5, 5A to 5D) to the target device.

Although the embodiment of the present invention have been described, it should be considered that the disclosed embodiments are an example in all respects and not restrictive. The scope of the present invention is indicated by the claims, and it is intended that all modifications within the meaning and scope of the claims are included in the present invention.

## Claims

1. A conveyance system (1, 1A to 1D, 1A_1 to 1A_5) comprising:
a plurality of devices (300, 300A to 300D) configured to perform predetermined processing on an article (5, 5A to 5D);
a conveyance robot (200, 200_1); and
an instruction unit (100, 100_1 to 100_4),
wherein an instrument of a type arbitrarily selected from a plurality of types of instruments (350, 350A to 350D) is installed in each of the plurality of devices (300, 300A to 300D),
the predetermined processing is performed using the installed instrument (350, 350A to 350D) in each of the plurality of devices (300, 300A to 300D, 300A_1), and
the instruction unit (100, 100_1 to 100_4) includes:
a first acquisition unit (11, 101) configured to acquire first identification information identifying a type of a conveyance target article (5, 5A to 5D);
a second acquisition unit (12, 12_3, 12_4, 101) configured to acquire second identification information identifying a type of the instrument (350, 350A to 350D) installed in each of the plurality of devices (300, 300A to 300D, 300A_1);
a specification unit (133, 101) configured to specify the type of the instrument associated with the type identified by the first identification information using association information (132b) associating the type of the article (5, 5A to 5D) with the type of the instrument (350, 350A to 350D) performing the predetermined processing on the article (5, 5A to 5D) of the type;
a selection unit (134, 101) configured to select a device in which the instrument of the specified type is installed as a target device among the plurality of devices(300, 300A to 300D, 300A_1) using the second identification information; and
a first output unit (14, 101) configured to output, to the conveyance robot (200, 200_1), a conveyance instruction to convey the conveyance target article (5, 5A to 5D) to the target device.

2. The conveyance system (1, 1A to 1D, 1A_1 to 1A_5) according to claim 1, wherein
the conveyance robot (200, 200_1) includes:
an autonomous traveling robot (210);
a first mechanism (220) that is mounted on the autonomous traveling robot (210) to deliver the article (5, 5A to 5D); and
a control unit (22 to 24, 22_1, 201) configured to control the autonomous traveling robot (210) and the first mechanism (220), and
the control unit (22 to 24, 22_1, 201), in response to the conveyance instruction,
moves the autonomous traveling robot (210) to a first mark position and posture according to a collection place of the conveyance target article,
causes the first mechanism (220) to execute a first collection operation collecting the conveyance target article after the autonomous traveling robot (210) reaches the first mark position and posture,
moves the autonomous traveling robot (210) to a second mark position and posture corresponding to the target device after completion of the first collection operation, and
causes the first mechanism (220) to execute a first distribution operation distributing the conveyance target article to the target device after the autonomous traveling robot (210) reaches the second mark position and posture.

3. The conveyance system (1, 1A to 1D, 1A_1 to 1A_5) according to claim 2, further comprising a storage cabinet (600) capable of storing a plurality of articles (5, 5A to 5D),
wherein the storage cabinet includes a second mechanism (62) configured to release a designated article (5, 5A to 5D),
the first mark position and posture is determined according to a place of the article (5, 5A to 5D) released from the storage cabinet (600), and
the instruction unit (100, 100_1 to 100_4) further includes a second output unit (15, 101) configured to output, to the storage cabinet (600), a release instruction of the article of the conveyance target.

4. The conveyance system (1A_1, 1A_2) according to claim 2, further comprising a shelf (500) on which a plurality of articles (5, 5A to 5D) can be placed,
wherein the shelf (500) includes:
a plurality of placement portions (51a to 51c); and
a first management unit (53) configured to manage management information (55) in which each of the plurality of placement portions (51a to 51c) is associated with a type of the placed article (5, 5A to 5D),
the first mark position and posture is determined according to a target placement portion on which the article (5, 5A to 5D) of the type identified by the first identification information is placed among the plurality of placement portions (51a to 51c), and
the target placement portion is specified from among the plurality of placement portions (51a to 51c) based on the management information (55).

5. The conveyance system (1A_1, 1A_2) according to claim 4, further comprising a storage cabinet (600) in which a plurality of articles (5, 5A to 5D) can be stored,
wherein the storage cabinet (600) includes:
a second management unit (63) configured to manage a type of each stored article (5, 5A to 5D); and
a second mechanism (62) configured to release a designated article,
the shelf (500) further includes a detector (52a to 52c) configured to detect whether each of the plurality of placement portions (51a to 51c) is in a first state in which the article (5, 5A to 5D) is placed or in a second state in which the article (5, 5A to 5D) is not placed, and
the first management unit (53) updates the management information (55) such that a placement portion that changes first from the second state to the first state among the plurality of placement portions (51a to 51c) corresponds to the type of the designated article after the second mechanism (62) completes the release of the designated article (5, 5A to 5D).

6. The conveyance system (1A_2) according to claim 5, further comprising a third mechanism (91) configured to move the article (5, 5A to 5D) released from the storage cabinet (600) to one placement portion in the second state among the plurality of placement portions (51a to 51c).

7. The conveyance system (1A_3) according to any one of claims 2 to 6, wherein
the control unit (22 to 24, 22_1, 201):
causes the first mechanism (220) to execute a second collection operation collecting the article (5, 5A to 5D) that is placed on the target device and subjected to the predetermined processing after the autonomous traveling robot (210) reaches the second mark position and posture and before the first mechanism (220) is caused to execute the first distribution operation;
moves the autonomous traveling robot (210) to a third mark position and posture corresponding to a distribution place (1000) of the article (5, 5A to 5D) on which the predetermined processing is performed after completion of the first distribution operation; and
causes the first mechanism (220) to execute a second distribution operation distributing the article (5, 5A to 5D) on which the predetermined processing is performed to the distribution place after the autonomous traveling robot (210) reaches the third mark position and posture.

8. The conveyance system (1A_4) according to any one of claims 1 to 7, further comprising a server (700) configured to output, to the instruction unit (100, 100_1 to 100_3), a performance command of the predetermined processing for the article (5, 5A to 5D) of the conveyance target according to a production plan,
wherein the server (700) modifies the production plan so as to reduce a replacement frequency of the instrument (350, 350A to 350C) in the plurality of devices (300, 300A to 300C, 300A_1) based on the second identification information.

9. The conveyance system (1A_5, 1D) according to claim 2, wherein
each of the plurality of devices (300A_1, 300D) is movable, and
the second mark position and posture is determined according to a position and posture of the target device.

10. The conveyance system (1A_5, 1D) according to claim 9, wherein
each of the plurality of devices (300A_1, 300D) has a mark provided at a predetermined position,
the conveyance robot (200) further includes a camera, and
the control unit (22 to 24, 22_1, 201):
calculates a position of the mark based on an image obtained by imaging of the camera after the autonomous traveling robot (210) reaches the second mark position and posture; and
corrects the first distribution operation by a difference between the calculated position of the mark and a reference position.

11. The conveyance system (1A_5, 1D) according to claim 9, wherein
each of the plurality of devices (300A_1, 300D) includes a characteristic object provided at a predetermined position,
the conveyance robot (200) further includes a sensor configured to detect a position of the characteristic object, and
the control unit (22 to 24, 22_1,201) adjusts a position and posture of the autonomous traveling robot (210) by a difference between a position detected by the sensor and a reference position when the autonomous traveling robot reaches the second mark position and posture.

12. The conveyance system (1B) according to any one of claims 1 to 11, wherein
the article is a component (5B) constituting a product,
the instrument is a tray (350B) accommodating the component, and
in the device (300B), the product is assembled using the component (5B) accommodated in the tray (350B).

13. The conveyance system (1C) according to any one of claims 1 to 11, wherein
the instrument is a jig (350C) fixing the article (5C), and
the device (300C) evaluates performance of the article (5C) fixed by the jig (350C).

14. The conveyance system (1D) according to any one of claims 1 to 11, wherein
the article is a seedling (5D),
the instrument is a planting claw (350D) planting the seedling (5D), and
the device plants the seedling (5D) using the planting claw (350D).

15. A conveyance method in a conveyance system (1, 1A to 1D, 1A_1 to 1A_5),
the conveyance system (1, 1A to 1D, 1A_1 to 1A_5) including:
a plurality of devices (300, 300A to 300D) configured to perform predetermined processing on an article (5, 5A to 5D); and
a conveyance robot (200, 200_1),
an instrument of a type arbitrarily selected from a plurality of types of instruments (350, 350A to 350D) being installed in each of the plurality of devices (300, 300A to 300D),
the predetermined processing being performed using the installed instrument (350, 350A to 350D) in each of the plurality of devices (300, 300A to 300D),
the conveyance method comprising:
acquiring first identification information identifying a type of a conveyance target article (5, 5A to 5D);
acquiring second identification information identifying the type of the instrument (350, 350A to 350D) installed in each of the plurality of devices (300, 300A to 300D);
specifying the type of the instrument (350, 350A to 350D) associated with the type identified by the first identification information using association information (132b) associating the type of the article (5, 5A to 5D) with the type of the instrument (350, 350A to 350D) performing the predetermined processing on the article (5, 5A to 5D) of the type;
selecting a device in which the instrument (350, 350A to 350D) of the specified type is installed as a target device among the plurality of devices (300, 300A to 300D) using the second identification information; and
outputting, to the conveyance robot (200, 200_1), a conveyance instruction to convey the conveyance target article (5, 5A to 5D) to the target device.
